# EUROPEAN PATENT APPLICATION

(11) **EP 0 797 160 A2**
(43) Date of publication of application: **24.09.1997**
(21) Application number: 97301933.4
(22) Date of filing: 21.03.1997
(51) Int. Cl.: G06F 17/30

(54) **Computer system and computer-implemented process for classifying records in a computer database**

(30) Priority: 22.03.1996 US 621046
(71) Applicant: Pilot Software Inc, Cambridge, Massachusetts 02141 (US)
(72) Inventor: Yarmus, Joseph S., Groton, Massachusetts 01450 (US); Bourgoin, Mario O., Cambridge, Massachusetts 02139 (US)
(74) Representative: Garratt, Peter Douglas

(57) **Abstract**

Data flow for the process of segmentation of a database is managed by an analysis table created and maintained within the database. Data are processed within the database. Segment definitions are stored in ore or more tables created in the database as a result of the segmentation process. The analysis table may include a field containing a random number. The random number may be used to subsample the records in the analysis table in order to limit the number of records, thus reducing processing time, while maintaining a sample size which is statistically significant.

## Description

The present invention relates to computer systems and computer processes for classifying data in a database into segments.

A rapidly developing area of technology in the field of computer database systems is the classification of data into segments according to target condition. Such a classification may be used, for example, to make predictions. This classification is sometimes referred to as data mining. In general, a database classification system identifies segments or groups of entities in a database according to how well they meet a target condition of interest. Each segment is defined by a selection criterion, e.g., a rule, which is determined as part of the classification process. The selection criterion defining a segment may be considered as a search query on fields in the database which may have a relationship to the target condition of interest. Such fields are called predictors. Database entities matching a selection criterion are in the segment defined by the selection criterion.

There are many kinds of systems which classify entities in a database into segments. Some of the more commonly used classification systems include neural networks, genetic algorithm classifiers, and classification and regression trees (CART). The use of CART is described in detail in Classification and Regression Trees by L. Breiman, et al. (Belmont, California: Wadsworth International Group, 1984). A classification system is also shown in U.S. Patent No. 4,719,571.

There are several implementations of CART, most of which process data by extracting and analysing a flat file of records from a database. When the database is relational, extraction of a flat file eliminates processing required to join numerous tables in the database. Implementations of CART also typically perform a depth-first search of the predictor space.

One problem with typical implementations of CART is that, in the initial stages of the algorithm, much more data is processed than is needed to obtain statistically significant results. Although a technique called subsampling may be used to reduce processing time, the entire flat file is nonetheless extracted from the database. This extraction involves wasteful and unnecessary copying of data. Since such classification is often performed on very large databases, e.g., having terabytes of data, such copying is impractical.

Another problem with typical implementations of CART is that a depth-first search does not provide an indication of a best classification at any level of the tree until the last branches of the tree are being analyzed. On the other hand, the depth-first search is performed on an increasingly smaller data sets of the same data, which improves memory management on the computer system. While a breadth-search may provide a best classification along any level of a search, such a search results in memory management problems because generally the entire data set is processed at each level of the search.

Accordingly, a general aim of this invention is to provide a system and method for classifying entities in a database into segments while operating on data in the database and without extracting a flat file.

In the present invention, the flow of data used to classify a database into segments is managed by an analysis table created and maintained within the database. The analysis table includes an identifier for each entity of the data set sampled from the database and an indicator of the segment in which it is contained. The analysis table also indicates the data in the target field. Using the analysis table, data are processed within the database to generate definitions of the segments. One or more tables are created in the database as a result of the segmentation process to identify the segmentation.

In one embodiment of the invention, the analysis table includes a field containing a random number. The random number may be used to subsample the records in the analysis table in order to limit the number of records to be processed, thus reducing processing time, while maintaining a sample size which is statistically significant. For example, all records in a particular node having a random number less than a given threshold can be selected for the purpose of determining the best split of the node. By adjusting the threshold applied to the random number according to a desired number of records and the number of records in the node, the sample size can be controlled.

Additionally, the analysis table may enhance memory management during the classification process by using the segment number stored for each record to limit the number of segments being classified. Thus, the classification process may divide only selected segments into further segments.

Another aspect of the invention is a system for classifying a database into segments and for storing definitions of the segments in one or more tables in the database. The tables may include statistical information associated with the segmentation. Storing segment definitions in a database allows for definitions to be accessed in the same manner as other data.

Another aspect of the invention is a classification system which classifies a database into segments using a sample of entities of the database. When a segmentation has been determined using this sample, segments having a substantial likelihood of having further significant segmentation are analyzed using a new sample of database entities in that segment.

The various combinations of one or more aspects of the present invention, and the embodiments thereof are also aspects of the present invention. It should be understood that those of ordinary skill in the art can derive other embodiments of the invention from the following detailed description of an example embodiment.

The invention will now be described by way of example with reference to the accompanying drawings:-
FIG. 1 is a perspective view of a computer system for an embodiment with the invention;
FIG. 2 is a block diagram of a computer system;
FIG. 3 is a schematic diagram of the memory system shown in FIG. 2;
FIG. 4 is a block diagram illustrating a database classification system;
FIG. 5 is an illustration of a segment definition, including a selection criterion and an associated statistical measure;
FIG. 6 is a diagram of an example decision tree such as may be generated using classification and regression trees;
FIG. 7 is a table illustrating an analysis table used in one embodiment of this invention;
FIG. 8 is a flowchart describing segmentation of a database using classification and regression trees;
FIG. 9 is a flowchart describing how a decision tree is developed in FIG. 8;

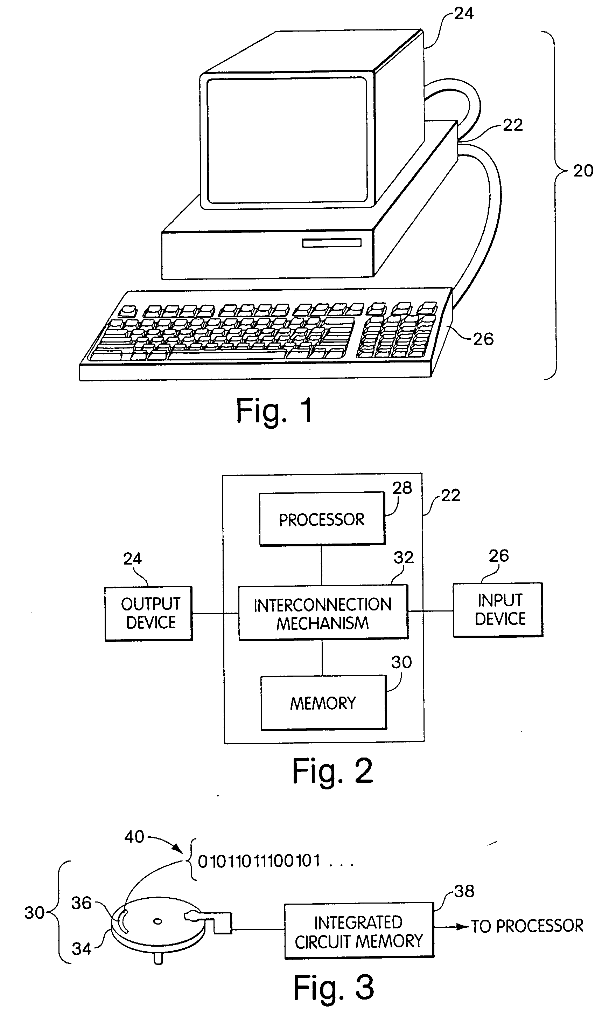

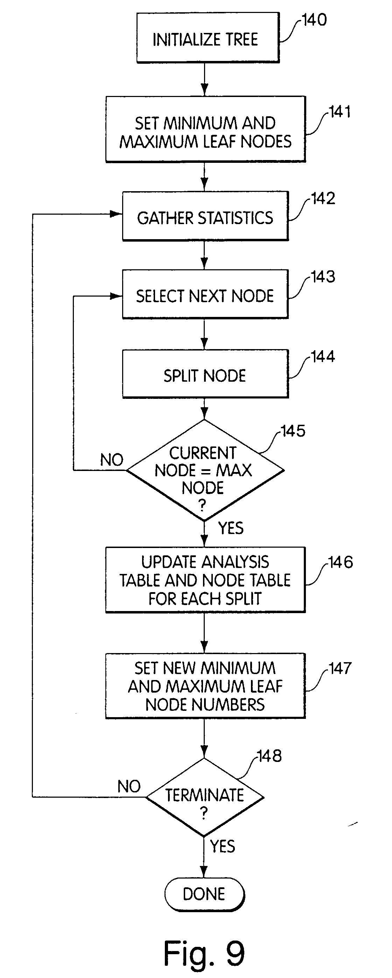

FIG. 1 0 is a flowchart describing how data is split in FIG. 9;
FIGS. 11A-11G are tables illustrating definitions and descriptions of segments; and

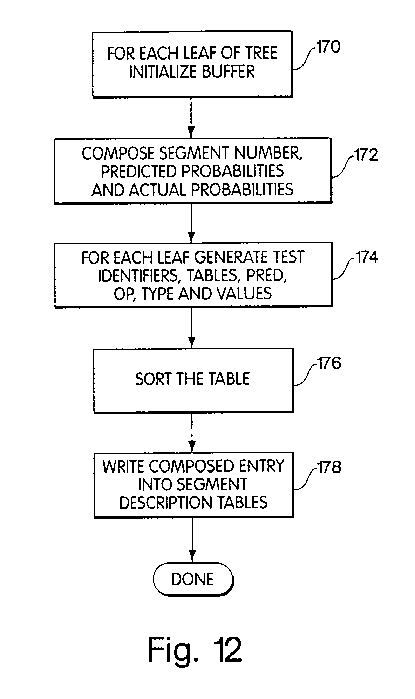

FIG. 12 is a flowchart describing how segment descriptions are written to the tables of FIGS. 11A-11F.

The present invention will be more completely understood through the following detailed description which should be read in conjunction with the attached drawing in which similar reference numbers indicate similar structures.

Referring now to FIG. 1, a computer system 20 includes an output device 24 which displays information to a user. The computer system includes a main unit 22 connected to the output device 24 and an input device 26, herein shown as a keyboard. As shown in FIG. 2, the main unit 22 generally includes a processor 28 connected to a memory system 30 via all interconnection mechanism 32. The input device 26 is also connected to the processor and memory system via the connection mechanism, as is the output device 24.

It should be understood that one or more output devices may be connected to the computer system. Example output devices include a cathode ray tube (CRT) display, liquid crystal displays (LCD), printers, communication devices such as a modem, and audio output. 11 should also be understood that one or more input devices 26 may be connected to the computer system. Example input devices include a keyboard, keypad, track ball, mouse, pen and tablet, communication device, audio input and scanner. It should be understood the invention is not limited to the particular input or output devices used in combination with the computer system or to those described herein.

The computer system 20 may be a general purpose computer system which is programmable using a high level computer programming language, such as "C, or "Pascal". The computer system may also be specially programmed, special purpose hardware. In a general purpose computer system, the processor is typically a commercially available processor, of which the series x86 processors, available from Intel, and the 68OX0 series microprocessors available from Motorola are examples. Many other processors are available. Such a microprocessor executes a program called an operating system, of which UNIX, DOS and VMS are examples, which controls the execution of other computer programs and provides scheduling, debugging, input/output control, accounting, compilation, storage assignment, data management and memory management, and communication control and related services. The processor and operating system define a computer platform for which application programs in high-level programming languages are written.

It should be understood the invention is not limited to a particular computer platform, particular processor, or particular high-level programming language. Additionally, the computer system 20 may be a multiprocessor computer system or may include multiple computers connected over a computer network.

An example memory system 30 will now be described in more detail in connection with FIG. 3. A memory system typically includes a computer readable and writeable nonvolatile recording medium 34, of which a magnetic disk, a flash memory and tape are examples. The disk may be removable, known as a floppy disk, or permanent, known as a hard drive. A disk, which is shown in FIG. 3, has a number of tracks, as indicated at 36, in which signals are stored, typically in binary form, i.e., a form interpreted as a sequence of one and zeros such as shown at 40. Such signals may define an application program to be executed by the microprocessor, or information stored on the disk to be processed by the application program. Typically, in operation, the processor 28 causes data to be read from the nonvolatile recording medium 34 into an integrated circuit memory element 38, which is typically a volatile, random access memory such as a dynamic random access memory (DRAM) or static memory (SRAM). The integrated circuit memory element 38 allows for faster access to the information by the processor than does the disk 34. The processor generally manipulates the data within the integrated circuit memory 38 and then copies the data to the disk 34 when processing is completed. A variety of mechanisms are known for managing data movement between the disk 34 and the integrated circuit memory element 38, and the invention is not limited thereto. It should also be understood that the invention is not limited to a particular memory system.

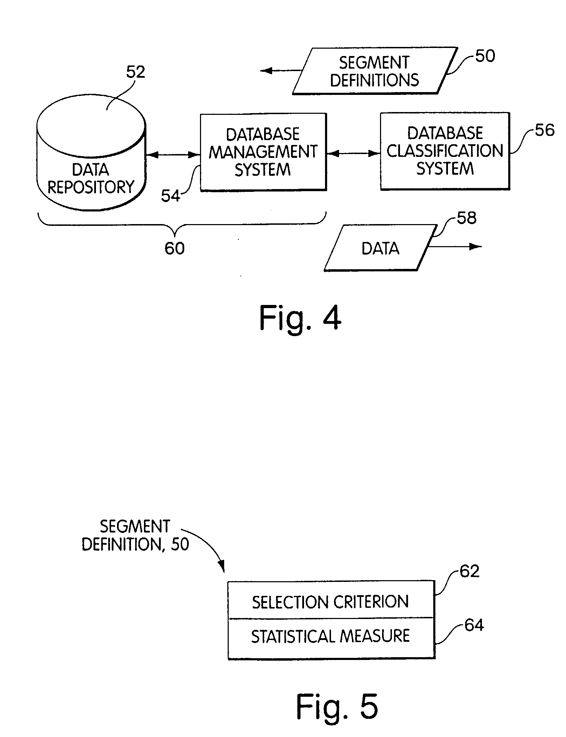

FIG. 4 is a block diagram illustrating a system for classifying data in a database into segments, in one embodiment of the invention. This system includes a database 60 which includes a data repository 52 for storing the data of the database, which may include memory system such as shown at 30 in FIG. 3. The database 60 also includes a database management system 54 which controls access to the data and handles copying of data between the different memory levels of the memory system 30.

Such a database management system typically provides access through a standard interface, for example, the Structured Query Language (SQL), such as described in SQL: The Structured Query Language, by C.J. Hursch et al. (Blue Ridge Summit, Pennsylvania: TAB Books, 1988), which is hereby incorporated by reference. An example relational database management system is the ORACLE-7 database, having an ODBC interface. Such a database is accessed using SQL queries encapsulated in an ODBC message sent to tile database server by a client program. Although the following description is given in terms of a particular example, using a relational database on a database server, accessed using SQL by a client program, it should be understood that the invention is not limited thereto and that other kinds of databases and other access mechanisms may be used.

The present invention also is useful with database management systems designed for operation on a machine with parallel processors. Such DBMS's include the DB2 and ORACLE7 database management systems, available from International Business Machines and Oracle, respectively.

A relational database is organized using tables of records. Each record contains related information that is organized into fields. Typical examples are customer lists wherein each customer has one or more records containing fields for address, telephone number, and so on. Some fields include variables such as total purchases, payments made each month and so on. Each item in the database that has a unique identifier, such as a customer, is considered an entity in the database. Each entity may have one or more associated records. The data in a database may be of many types, including simple and compound data types. Simple data types include numbers, dates and strings, for example, while compound data types include sets and arrays, for example. Simple data types are represented as records that associate a unique identifier with a single value while compound data types associate a unique identifier with multiple values. When the compound data type is an array, additional fields are used to index each value. The different types of data may involve different types of queries and other operations.

It is desirable to apply data warehousing techniques to the database 60 prior to classification by a database classification system. Such techniques involve ensuring that the data in the database are complete and correct and have correct formats. A database classification system 56 retrieves data 58 from the database 60 and classifies the data to determine segment definitions 50, described below in connection with FIG. 5. Classification and regression trees (CART) are one technique used to create segment definitions. Classification and regression trees are described in more detail in Classification and Repression Trees by L. Breiman, et al. (Belmont, California: Wadsworth International Group, 1984), which is hereby incorporated by reference.

Referring now to FIG. 5, a segment definition 50 includes a representation 62 of a selection criterion applied to the data in the database. An example of a selection criterion is a rule. A segment definition also may include an indication 64 of an associated statistical measure, e.g., a probability, an average measure or an average rate for a segment entity, which indicates how well entities in a segment meet some target condition. Other values related to a probability, such as the standard deviation, variance and mean may also be determined. An indication of the target may also be provided.

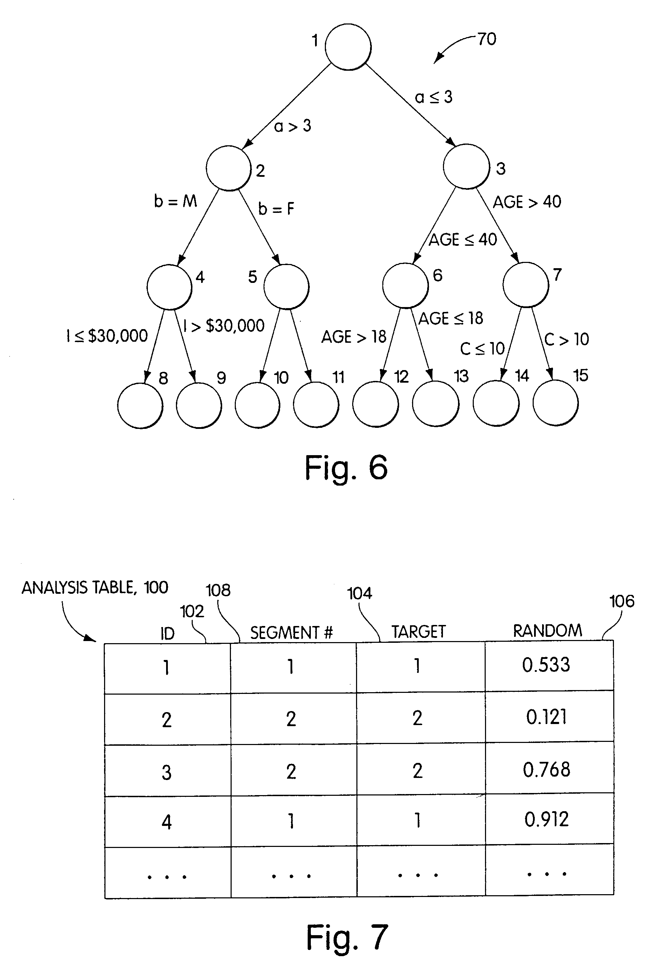

Referring now to FIG. 6, using CART to determine segmentation of a database involves generating a decision tree 70 representing the segment definitions. The decision tree includes a number of nodes, numbered here sequentially from 1 to 15 in a breadth-first order. Each node represents a segment and has an associated selection criterion, e.g., node 8 represents a segment in which each entity has a>3, b=M and 1<$30,000. Using CART, data in a segment are split into two (or more) segments according to the predictor that provides the best statistical grouping or split of the data. Nodes which are branches of another node indicate the best split of the other node and have a segment definition that is narrower than the segment definition of the other node. For example, node 1 may represent all customers. Node 2 may represent customers which made fewer than three purchases, whereas node 3 may represent customers which made 3 or more purchases, where the target condition is a total of purchases over a given amount.

As described above, the database classification system 56 process data in the relational database 60 to define a segmentation such as represented by the decision tree in FIG. 6. An example implementation will now be described in connection with FIGS. 7-12 and the attached Appendices I-VIII.

In order to avoid extraction of a large flat file of records from a database, in the present invention data are processed and classified within the database. In order to perform such a classification in the database, a structure is constructed in the database to maintain an indication of the sample on which classification is being performed and the segment or node in which each record in the sample is classified. Such a structure is illustrated in FIG. 7, herein called a an analysis table 100.

The analysis table 100 includes a row for each unique identifier 102 for each entity in the sample selected from the database for classification. The columns of this table include the unique identifier 102 and an indication 104 of whether this entity meets a target condition. A random number 106, e.g., between 0 and 1, is also assigned in one embodiment of the invention. The use of these random numbers will be described in more detail below. A segment number, as indicated 108, indicates the present segment or node in the decision tree, such as in FIG. 6, to which the entity is assigned. Upon completion of classification, each entity in the analysis table is assigned to a leaf node of the decision tree. The data shown in the analysis table 1 00 of FIG. 7 are merely exemplary and are not intended to illustrate actual data. Unlike the prior art, the data in the records for the entities of the sample being analyzed are not extracted from the database into a flat file. Rather, the analysis table 100 is created and is maintained in the database.

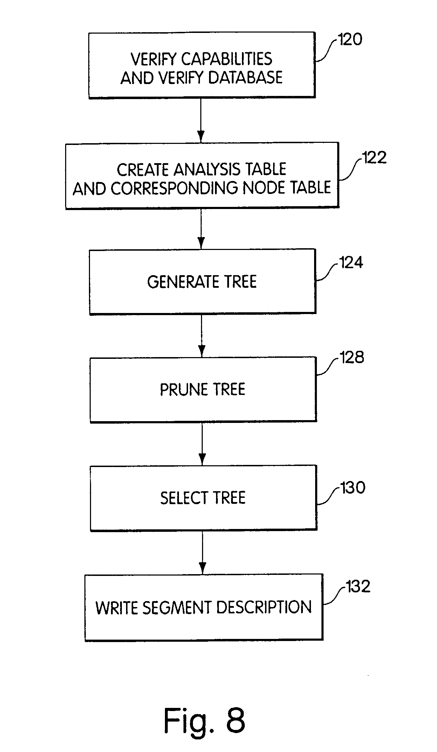

An example process using an analysis table 100 (FIG. 7) and classification and regression trees to generate a segmentation will now be described in connection with FIG. 8. This example is applicable to a relational database accessed using SQL. A computer system may be programmed to perform this process using a high level programming language with embedded SQL commands for accessing a relational database. In this example, the target field in the analysis table is assumed to be numeric and takes only one of two values, e.g., either 1 or 2. Categorical targets having only two categories, e.g., male or female, are also converted to a numeric target. Those of ordinary skill in this art should be able to adapt the following example to continuous targets, other database types and database access mechanisms given the following detailed description. Input used to begin classification may include information required for connection to the database, the name to be used for the analysis table, the name to be used for the segment descriptor and associated tables described below, a maximum allowed run time, a name of a target field and allowed predictor fields.

The first step of the process involves verifying capabilities of the database in step 120. This step involves verifying that the database used supports permissions such as the ability to create, update and drop tables.

The next step of the process is step 122 of creating a an analysis table 100 in the database being accessed. Example SQL queries for creating an analysis table in step 122 are shown in Appendix VIII. After creating the analysis table, it may be desirable to verify that the analysis table and fields to be used for predictors are accessible from the database and that tile analysis table has enough entities for classification. This step may involve, in this example, ensuring that the target field is dichotomous with values of 1 and 2 and with no missing values. This step also may involve ensuring that the predictors have enough corresponding values to be useful.

A node table is also created by the database classification system, but not necessarily as database table. The node table may be implemented as an array, indexed by node number, that indicates, for each node N of a decision tree (such as in FIG. 6), a number n0 of entities that meet the target and the number n1 of entities that do not meet the target. The test defining the split of the node is also stored. Thus, an example node table is as follows:

| node | n0 | n1 | test |
|---|---|---|---|
| | | | |
| 1 | 50,000 | 30,000 | a>3 |
| 2 | 25,000 | 15,000 | b≤2 |
| 3 | 15,000 | 25,000 | c>12 |

The next step of the process is step 124 of generating a decision tree using the data set identified by the analysis table 1 00. An example process for generating the decision tree is described in more detail below in connection with FIG. 9. In this process, the random number field in the analysis table may be used to generate subsamples of the data set being processed, in a manner described below. Another kind of sampling involves the generation of train, test and evaluate sets of data, if desired. In particular, each of these sets of data can be generated by adding a column to the analysis table for indicating the set in which an entity belongs.

After a decision tree is generated it may also be "pruned" as indicated in step 128. Although this flowchart indicates that pruning is done after the tree has been generated ill step 124, it is possible to prune the tree during the process of generating the tree. Pruning the tree generally involves identifying, for each node, the range of subtrees, if any, in which there is a leaf. This identification requires repeated passes over the tree data structure, one pass per subtree. The first pass computes the diversity within a given node. Each subsequent pass updates the estimates of total diversity at the leaves subtended by a node, and identifies those nodes whose splits are to be removed to produce the next subtree. Node diversity may be measured, for example, by a Gini metric or any other known diversity metric. The node table may be used to perform this step.

Next, in step 130, a subtree with the minimum error rate on a test subset of the data may be selected as the best tree. This step involves a comparison of the statistics gathered for different data sets such as found in the node table, and in essence eliminates or confirms the selections of the splits of the nodes. This selection process uses the range of subtrees for each node in the tree to accumulate within-class error rates for each subtree for both test and evaluation subsets. The total error of each subtree is computed and used to select the best tree (i.e., the one standard error tree).

Given a selected tree, whether as generated in step 124 or as pruned or selected as in steps 128 or 130, the description of the segments may be written in one or more tables in the relational database in step 132. This step is described in more detail in connection with FIGS. 11A-11G and FIG. 12, and involves, for each leaf in the selected tree, composing and writing the description of each leaf node in the decision tree into one or more tables, such as described below in connection with FIGS. 11A-11G.

The process of generating a decision tree, step 124 in FIG. 8, will now be described in connection with FIG. 9. This iterative process finds a best split of a segment according to the given predictors and updates the analysis table 100 and node table described above according to the best split. The first step of this process is initialization of the analysis table 100 in step 140. In particular, all of the records in the analysis table 1 00 are assumed to be in an initial segment, e.g., segment 1.

A segment number or a range of segment numbers is then selected in step 141, as indicated by minimum leaf node and maximum leaf node numbers. Initially, the minimum leaf node number is 1 and the maximum leaf node indicates the highest segment number of the current level of the tree, which will be less than or equal to (2ⁿ)-1, where n is the number of the current level of the tree. These values are used because the generation of the decision tree terminates when there are no more updatable nodes. Example I includes an example SQL instruction for selecting the node numbers to be evaluated.

### EXAMPLE I

SELECT distinct segment
FROM analysis
WHERE segment >= *minleqfnode*
ORDER by segment

The next step is gathering statistics on the current leaves of the decision tree, in step 142. The step involves creating a column in the database that counts how many entities there are in each segment for every target. An example SQL query is below in Example II:

### EXAMPLE II

CREATE TABLE targsum (segment INT, nO INT, n I INT) PCTFREE0;
INSERT INTO targsum (segment, nO, nl)
SELECT segment, SUM (2-target), SUM(target-1)
FROM ANALYSIS s
GROUP BY segment;
The contents of this table are used to update the node table described above.

A current node number is the set of step 143. The current node number is initially one, and generally is incremented by one on each iteration. The current node number may also be selected from a queue such as may be generated by the SQL statement of Example I.

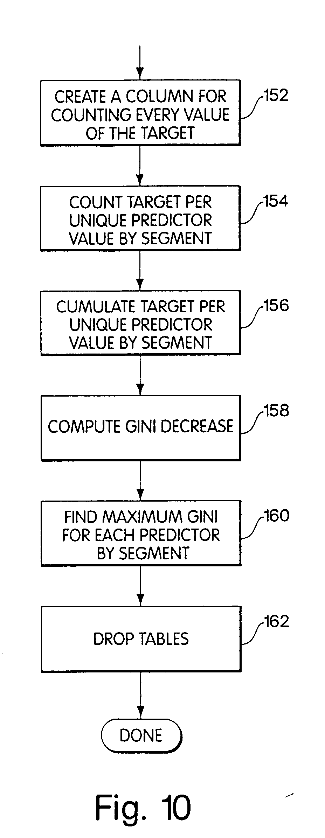

The data in the current node are then split into two separate segments in step 144. Splitting the data of a node involves computing the counts of each value of the target by node, looping over the available predictors and performing either a categorical or ordered split based on the predictor's type. The predictor providing the best split of the node is determined by the ability of the predictor to reduce the diversity of each node. In this example, node diversity is measured by the Gini metric. There are many other diversity metrics which may be used to split nodes. The step of finding the best split of each node is described in more detail below in connection with FIG. 10.

In one embodiment of the invention, either a categorical dichotomous split or ordered dichotomous split is performed based on the type of the predictor. For a categorical dichotomous split, the cumulative counts of each value of the target are computed for each unique count of class 1 of each unique value of the predictor, organized by node. Each of these values is combined with the counts of each value of the target by node to compute the reduction of diversity of each node, using that value for a split. The predictor that maximizes the reduction in diversity of a node is selected as the best split of the node. The set of values of the predictor that defines the left side of each split is then obtained. The test defining the left side of this split is stored in the node table described above.

For a dichotomous ordered split, the cumulative counts of each value of the target for each predictor value are computed, and organized by node. Each of these values is combined with the counts of each value of the target by node to compute the reduction in diversity of each node, using that value for a split. The predictor which maximizes the reduction in diversity of a node is selected as the best split of the node. The value of the predictor that defines the left side of the split is obtained. The test defining the left side of this split is stored in the node table described above.

If the current node number is the maximum leaf node number, or the last node in a queue, as determined in step 145, the analysis table 100 is updated in step 146. Otherwise the next node is selected and its best split is found by repeating steps 143 through 145.

In order to update the analysis table 100 in step 146, for each node that is split and for which an effective split was found an appropriate test is performed. For example, either a set test for membership in a left side split for the node (for categorical predictors) or a less than test for membership in the left side of a split for the node (for ordered predictors) may be performed on each entity defined in the analysis table. When the analysis table is updated, if no good split is found on a node then the entitles in that node are not updated since there is no split. A set of example SQL statements for updating the analysis table is below in Example III:

### EXAMPLE III

To Update Analysis Table:
Update Analysis set segment = 2* segment
Where segment >= *minleqfnode*

For the First Split:
Update Analysis set segment = 1 + segment
Where segment => 1 and
Key in (select key from database where test_node_I)

For other levels:
(for node 2 and 3 split)
Update analysis set segment = 1 + segment
Where key in (select kev from database where segment 4 and test_node_3)

After the analysis table is updated, new minimum and maximum leaf node numbers are selected in step 147 for the next level of the tree to be processed. For example, the minimum leaf node number is doubled and the maximum leaf node number greater than the minimum leaf node number is obtained from the analysis table. The SQL statement in Example I can be used to create a queue of nodes to be split. Since the node number associated with a segment which was not split stays the same and drops below the minimum leaf node number, such a node are is not processed in further iterations. A termination condition is then evaluated in step 148. If the termination condition is not met, a next level of the tree is processed by repeating steps 142 through 148. The termination condition may be met by running out of nodes to split or by running out of time. For example, no more nodes are left to split when the maximum segment number obtained is less than the new minimum leaf node number after the analysis table has been updated. A suitable SQL statement to obtain the maximum leaf number obtained is:
select max(segment) as maxsegment from analysis, which is then compared to the minimum leaf number.

Alternatively, a predetermined maximum run time may be a termination condition. For example, the run time of a previous pass through the split node step 144 may be used as an estimate of the run time for a next pass. If a next pass exceeds the allowed run time, the termination condition is met. Upon termination, each item in the analysis table is classified in one segment which is a leaf of the decision tree. It is possible to gather statistics on the leaf nodes as with other nodes in step 142.

The step of finding the best split of a node will now be described in connection with FIG. 1 0. Example SQL statements for each step are found in the attached Appendices 1 to VII.

First, in step 152, a column is created in the database for counting every value of the target. The target is then counted per unique predictor by node by summing the values of the target field for the training set in step 154. The example SQL statement below in Example IV performs steps 152 and 154.

### EXAMPLE IV

CREATE TABLE predsum (segment INT, predictor PTYPE, nO INT, n1 INT) PCTFREEO;
INSERT INTO predsum (segment, predictor, nO, nl)
SELECT s.segment, D.PREDICTOR, SUM(2-s.target),
SUM(s.target-1)
FROM DATABASE d, ANALYSIS s
WHERE d.key = s.key
GROUP BY s.segment, D.PREDICTOR;

This statement is useful for simple data types. Example SQL statements for a variety of data types are found in Appendix VII.

The analysis table 100 and the statements shown in the Appendices provide a mechanism for ordering the data to be analyzed. In particular, the data are grouped by segment, and for each segment the data are grouped by predictor. Thus, identifiers and their corresponding target values are provided in sequence by segment for a given predictor. Thus, for one predictor, its Gini metric is generated for each segment. The next predictor is then used to generate Gini metrics for it for each segment. A running total and best predictor is kept for each segment until all predictors have been analyzed.

Given the set of data to be analyzed for a segment, the target is then cumulated per unique predictor value by segment in step 156. This step may be implemented, for example, by a series of SQL statements as shown in Appendices I-VI. SQL is not particularly efficient in the processing of the underlined step in Appendices 1 and 11. This step is expanded into several, more efficient steps in the SQL of Appendices III-VI.

The Gini decrease per predictor is then found for each segment in step 158. This step may be implemented, for example, by a series of SQL statements as shown in Appendices I-VI. The maximum Gini for each predictor is then selected in step 160, also as shown in Appendices I-VI. The best predictor is then selected from this information. Finally, tables used in the computation process from the database are dropped in step 162, for example using the commands at the end of each of appendices I-VI. Steps 156 through 160 may be implemented also using a computer program written in another programming language, e.g., "C," which interacts with a computer program that accesses the database to perform steps 152-154.

In the foregoing example, each entity of each segment in the analysis table 100 is analyzed when the best split of a node is determined. In most cases, however. it is neither necessary nor practical to analyze every entity in the analysis table for all segments being analyzed. In particular, a typical classification may be performed on a large number of entities sampled from a large database. For example, a large database of data for about forty million entities may be sampled to obtain a set of one million entities for classification. Such a sample may be represented by the analysis table 100. In order to obtain a statistically relevant analysis of the predictors and their relationship to a target condition on these entities, however, it is riot necessary to analyze all one million of them. The data set may be subsampled randomly so as to keep the number of entities small but still statistically significant. For example, node 1 may be split into nodes 2 and 3 using, for example, only ten thousand entities. Such subsampling is provided for in the present invention by an efficient use of the random number field 106 in the analysis table 100.

Subsampling reduces the size of the data set for a segment being analyzed by selecting only a certain percentage of the entities in a segment. For example, only those entities having a random number value of, for example, less than 0. 1 given a random number on a scale of 0 to 1 will allow for a selection of ten percent of the entities. It has been found that a sample size of roughly ten thousand entities per segment is capable of providing enough information for splitting the data of a segment. By knowing the number of entities within a given segment, the rate of the number of desired entities to be analyzed to the number of entities in the segment provides the threshold value for the random number used in selecting entities for analysis of a best split of a node. Such subsampling greatly improves the amount of time used to perform the classification and regression tree analysis, while maintaining statistical significance of the analysis, and can be readily implemented by modifying the "WHERE" clause of an SQL statement used to selected entities from the analysis table 100, such that their random number is less than a given threshold.

Another kind of sampling possible with the analysis table is the selection of only certain segments or nodes to be split using the segment numbers to be updated. This kind of sampling permits memory to be managed efficiently by reducing repeated accesses to main storage, e.g., disk, by processing data as much as possible in faster memory in the i-memory system of the computer. For example, if the integrated circuit memory 38 (FIG. 3) only holds records for about thirty thousand entities, then only three nodes should be analyzed at a time. The minimum and maximum node numbers being analyzed, in combination with the first kind of subsampling, provides this capability.

Another kind of sampling, which is particularly applicable to implementations of CART that operate on a sample extracted from a database and stored in memory, involves generating a decision tree until its nodes cannot be split into further nodes. Each leaf of this tree is then analyzed after the tree is pruned. For leaves which could not be split and for which there is still a large number of samples, e.g., one thousand, nothing further is done. Such nodes are not likely to have any further significant segmentation. For leaf nodes having a small number of samples, however, a new sample of database entities in that node is obtained from the database. Such nodes are likely to have a further significant segmentation. For implementations which extract a sample of data from the database, typically for about 10,000 entities, a new sample of 10,000 entities is extracted. This process, however, involves applying the segment definition of the node to be analyzed to the database. Applying such a segment definitions, however, may involve SQL statements which could join more than two tables. An efficient process to avoid joining multiple tables when applying two or more segment definitions is described in commonly-owned European patent application entitled "Computer System and Computer-Implemented Process for Applying Database Segment Definitions to a Database," filed on even date herewith.

The purpose of a classification process such as CART is not merely to determine a segmentation of one sample of data according to a target condition. Rather the segment definitions defined through the classification process may be applied to other data to make predictions and to assist in decision making. Accordingly, upon completion of the classification process, the definitions of the segments and some statistical information are generated and stored to permit their application to other data.

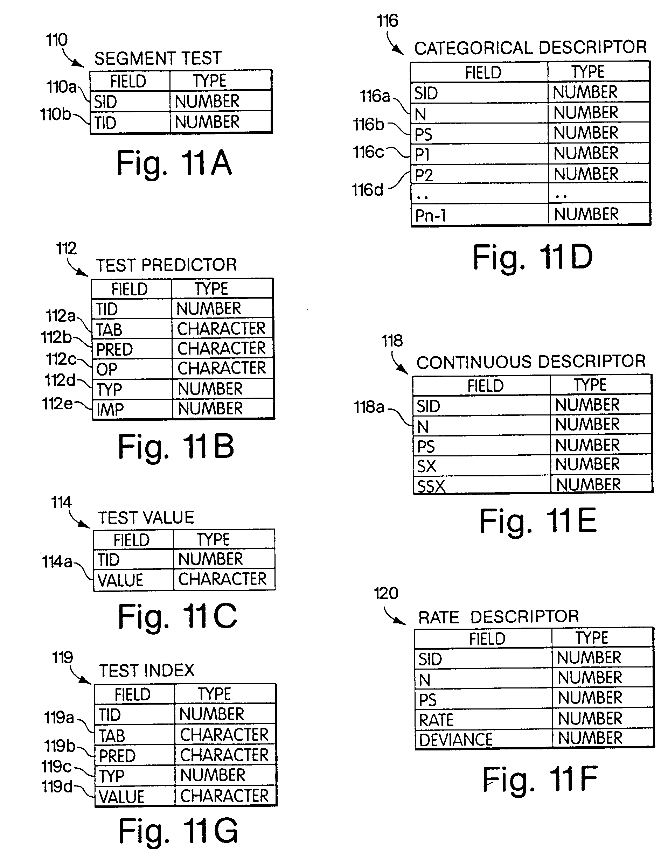

Example tables for storing segment definitions in the relational database are shown in FIG. 11A-11G. There are many other ways to store segment definitions, and the invention is not limited to this example. One table is the segment test table 110 in FIG. 11A. This table includes a column for a segment identifier (SID) 11Oa for each leaf node in the decision tree and column for a test identifier (TID) 11Oh associated with the segment. A second table is a test predictor table 112 in FIG. 11B. This table includes, for each TID, an indication 112a the table in which the field is located, an indicator 112b of the predictor field, the operation 112c performed on the value in the field and the type 112d of the data (whether categorical or ordered). Example operations are ≤, >, IN, INCLUDES, EXCLUDES. An indication 112e of the importance of the test is also provided. The importance of a test may be indicated by, for example, the Gini metric associated with the test. A test value table 114 in FIG. 11C is also used which includes, for each TID, a list 114 of values used for each of the operations in the test predictor table 112. As one example, assume that a segment N was defined by the rules A> 1 and A<3, applied to a variable A, a number, in table T. The segment test table 110 would include a TID, e.g., X, for the segment N. The test predictor table 112 would include, in two rows for X, an indication of the table T, the predictor A, the operations < and > and the type "ordered." The test value table would include, for the TID X, a row for each of "1" and "3".

For compound data types an additional test index table 119, as shown in FIG. 11G, may also be provided. The test index table includes at least one row for each TID corresponding to a compound data type. Another column 119a indicates the table containing the predictor, indicated at 119b. The type 119c of the predictor and a value 119d for the test are also provided. For example, assume a test uses revenue of a month as a predictor, where this revenue is stored as an array indexed by month. The test predictor table 112 could include the following row:

| | | | | | |
|---|---|---|---|---|---|
| TID | Tab | Pred | Op | Typ | Imp |
| 1 | Performance | Revenue | < | numeric | 0.8 |

and the test index table could include the following row:

| | | | | |
|---|---|---|---|---|
| TID | Tab | Pred | Typ | Value |
| 1 | Performance | Month | String | January |

Additional test predictor, test value and test index tables may also be generated for each TID for other tests called surrogates. A surrogate is a test on another predictor that produces results which are statistically similar to the results obtained by the actual test represented by the TID. In such a case, these tables have the same format as the tables for the actual test, but the importance value 112d represents the agreement between the surrogate and the test. This agreement may be represented, for example, by a ratio of the number of entities which are classified in the same segment by the different tests to the total number of entities to be classified by either test.

Statistical information about the segments also may be generated and stored using tables 116, 118 and 119 in FIGS. 11D-11F. Each segment has a corresponding row in a table in one of these forms, where the form of the descriptor depends on the type of the target. Where the target is a categorical one, a table 116 as shown in FIG. 11D includes a row for each SID. The table includes a column for the number 116a of entities in each segment, and a column for 116b, 116c etc. each of a set of probabilities P, which indicate the probability that an entity in each segment meets the target. Probability PS is the sum of the probabilities PI, P2..., Pn. Where the target is a continuous value, a table 118 as shown in FIG. 11E includes a row for each SID, and a column for the number 118a of entities N in each segment. The table also includes a column for the probability PS that an entity meets the target, a column for the sum SX over all entities of the target and a column for the sum of squares SSX of the target value over all entities. Where the target is a rate, a table as 119 shown in FIG. 11F, includes a row for each SID, and a column for the number of entities N in each segment. The table also includes a column for the probability PS that an entity meets the target, and a column for the average rate of all entities in each segment. A column for the deviance may also be used.

Referring now to FIG. 12, the writing of such tables will now be described. This process is used to generate the tables of FIGS. 11A-11G and can be adapted by those of skill in this art to generate other kinds of tables.

For each leaf in the selected tree, the following steps are performed. First, in step 170, a buffer is initialized for the segment entry of the leaf. Next, a segment number and predicted probabilities are composed in step 172. The predicted probabilities are based on the training subset. Actual probabilities may also be composed for an evaluation set if one is used. Test identifiers are then generated for each node in the decision tree, using the splits defined for each node to determine the table, predictor, operation, type and value used by the test. These may be obtained from the node table described above. The test identifiers are collected for each ancestor of each leaf. The list of test identifiers for each leaf is stored in the segment test table in FIG. 11A.

The test identifiers for each leaf are then sorted in step 176 by predictor to keep only the narrowest condition on each predictor. The tables in FIGS. 11A-11G are then created using the information collected in steps 172 through 176.

The segment descriptions found in FIGS. 11A-11G may be used to apply to new data and to visualize segmentation of the database. Application of such segment descriptions to new data is found in commonly-owned European Patent Application, filed on even date herewith, entitled "Computer System and Computer-Implemented Process for Applying Database Segment Definitions to a Database," which is hereby incorporated by reference. An example of a tool for visualization of segmentation of a database is found in commonly-owned European Patent Application, filed on even date herewith, entitled "Graphical User Interface and Display Process for Data Segments in a Computer Database," which is hereby incorporated by reference.

The present invention provides the capability of using CART on data residing in a relational database without requiring extraction of a flat file from the database. An analysis table in the database which represents the data set used by CART and which contains a random number field for each entity allows data flow to be controlled so as to maximize processing efficiency, address memory management issues and to control building of a decision tree. This data flow control allows a breadth-first search of the predictor space to be performed, which in turn allows a best classification to be provided at any time during the classification process.

Having now described a few embodiments of the invention, it should be apparent to those skilled in the art that the foregoing is merely illustrative and not limiting, having been presented by way of example only. Numerous modifications and other embodiments are within the scope of one of ordinary skill in the art and are contemplated as falling within the scope of the invention as defined by the appended claims and equivalents thereto.

Each feature disclosed in the description, and (where appropriate) the claims and drawings may be provided independently or in any appropriate combination.

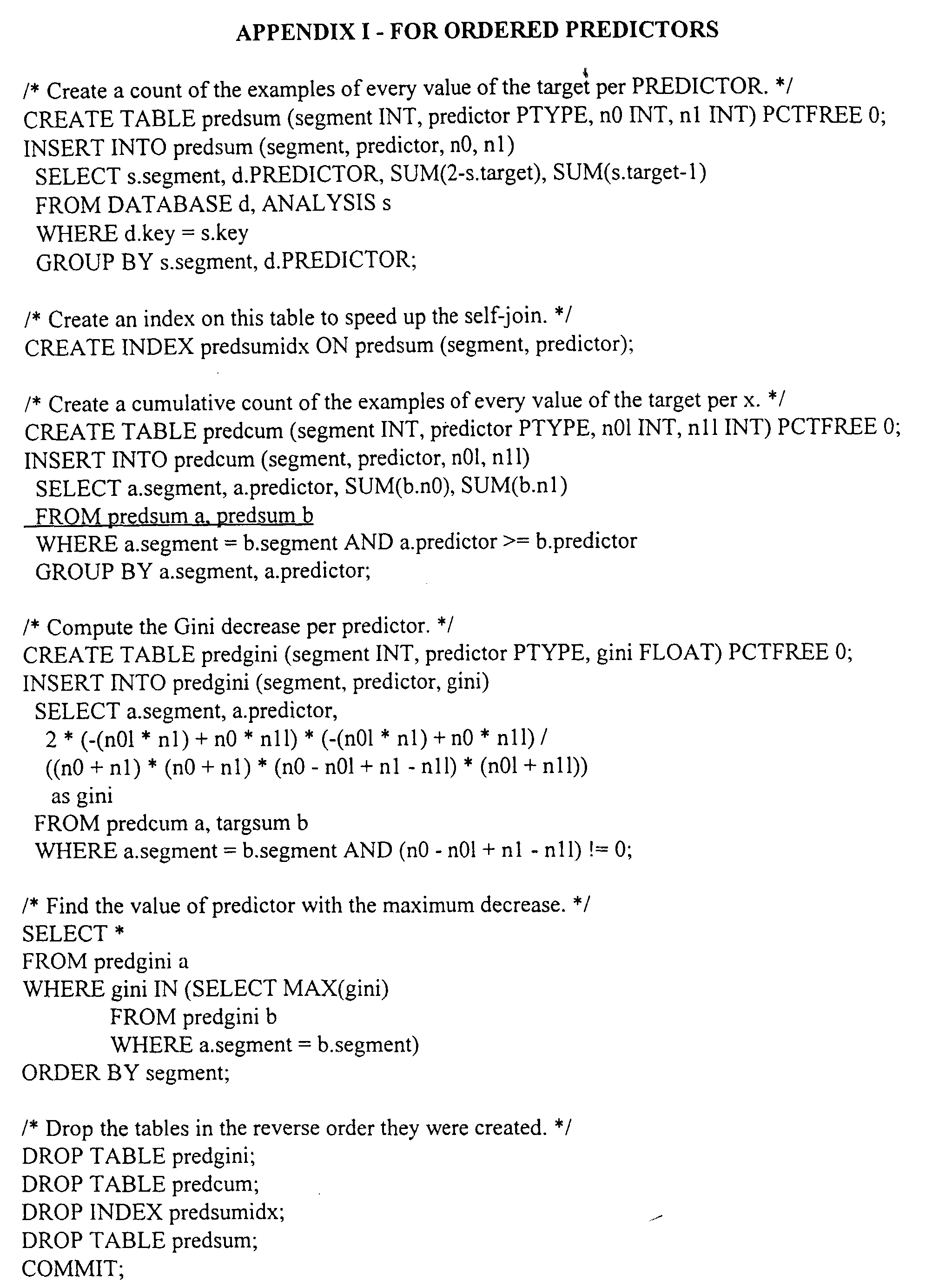

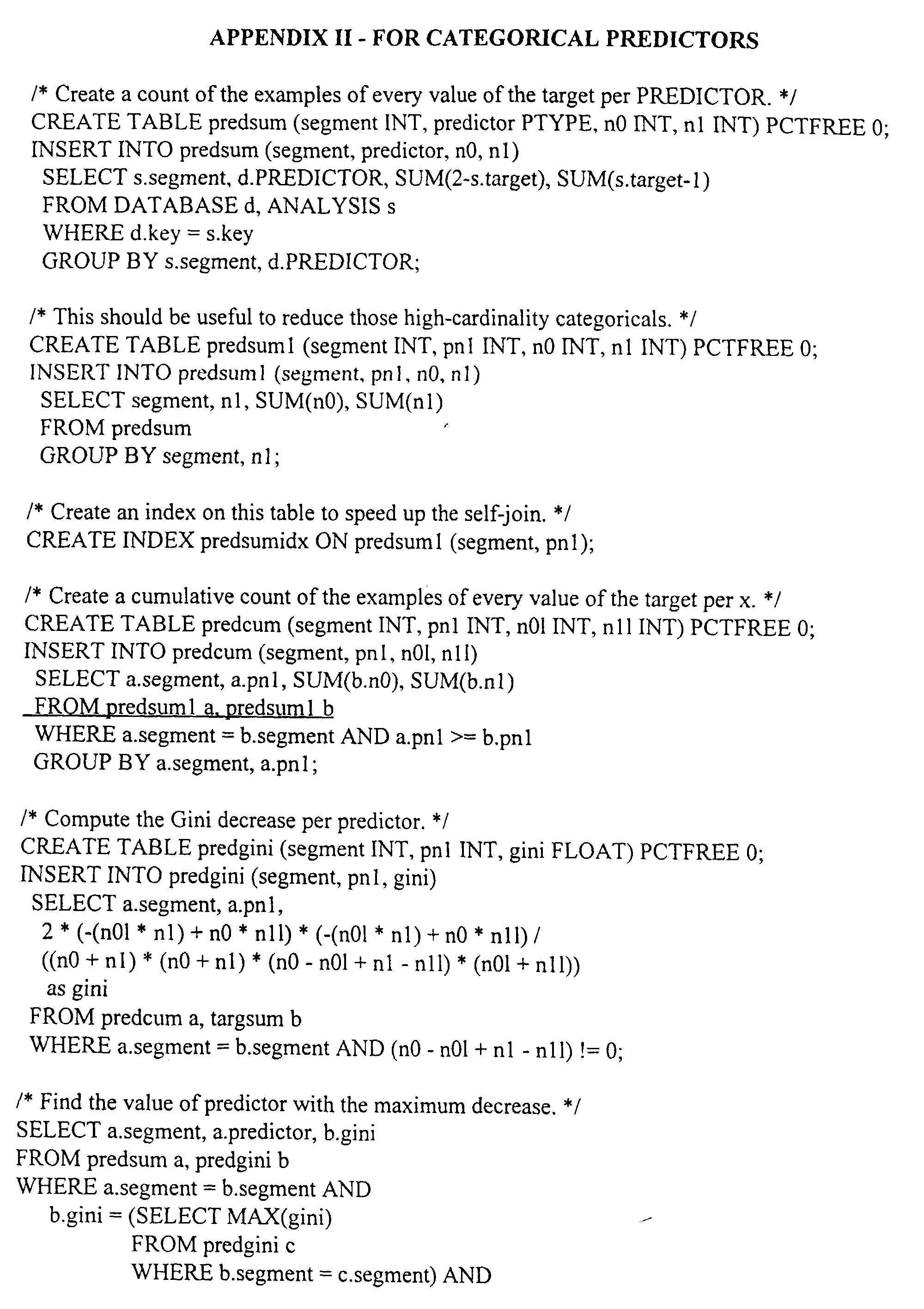

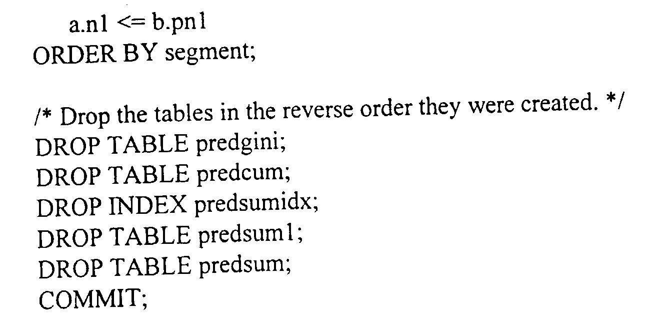

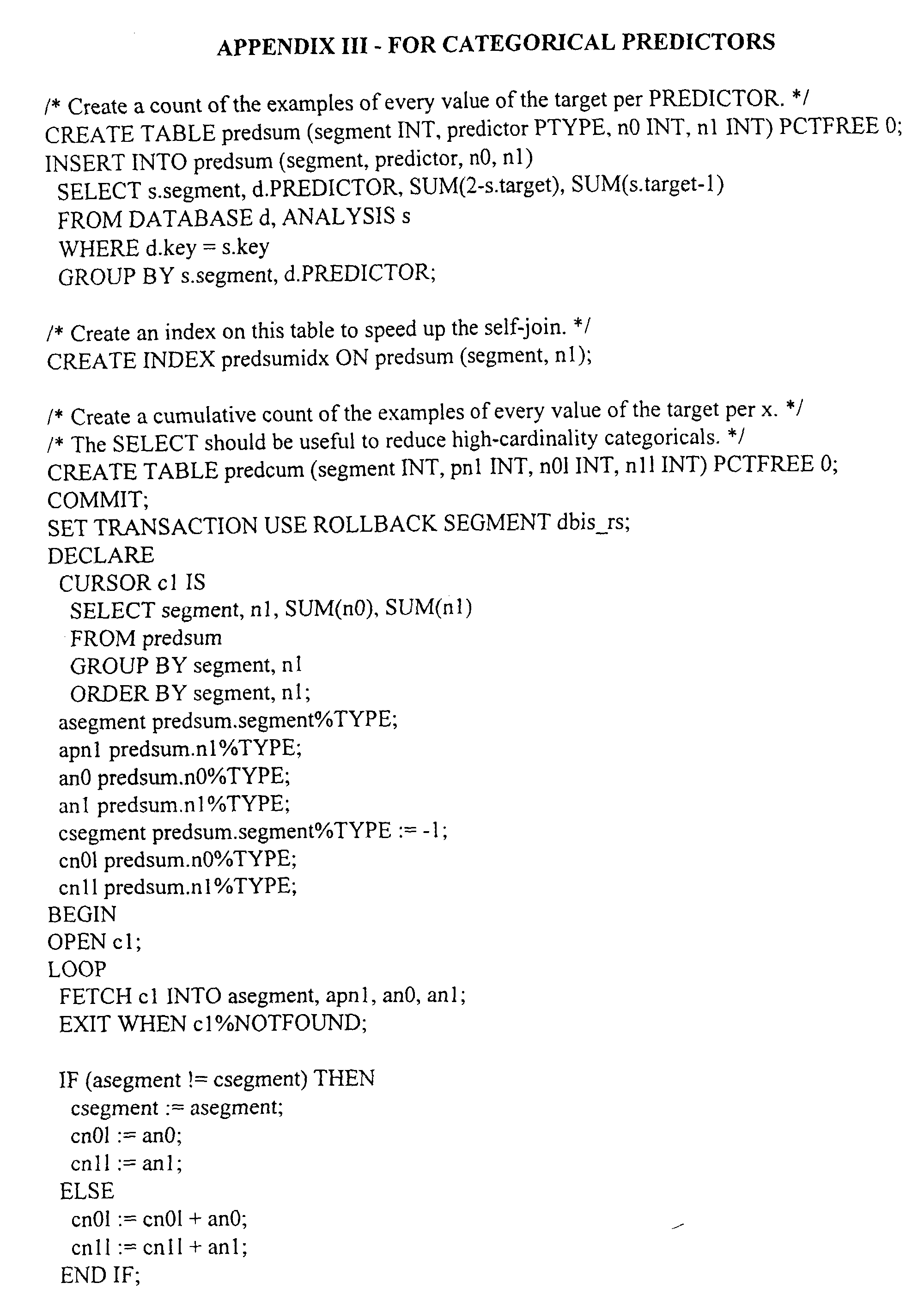

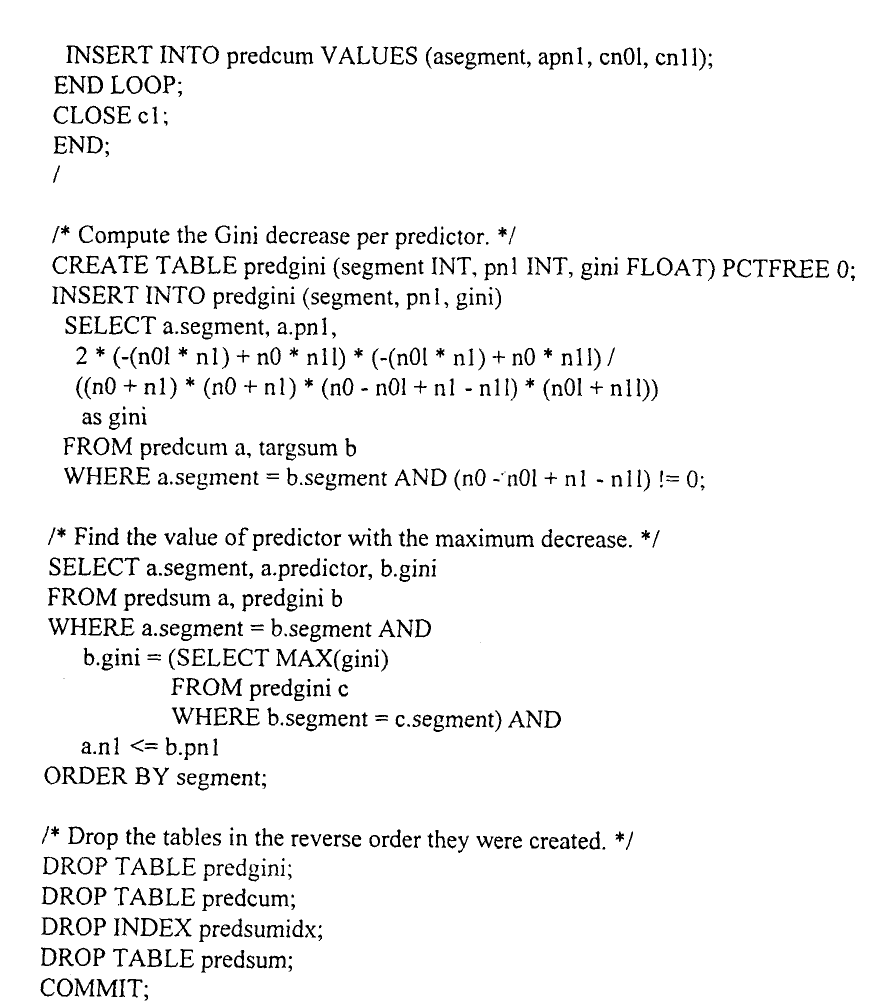

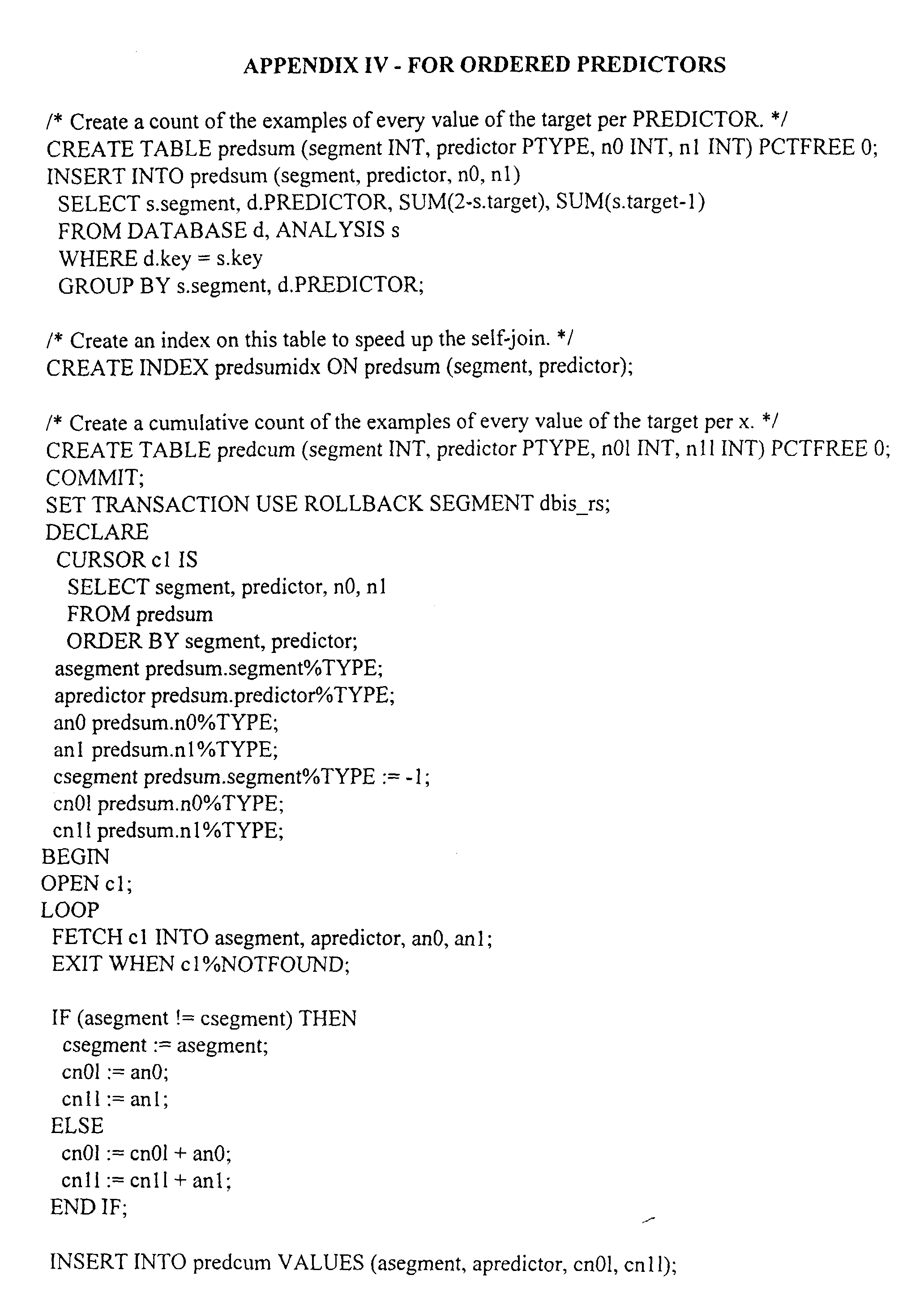

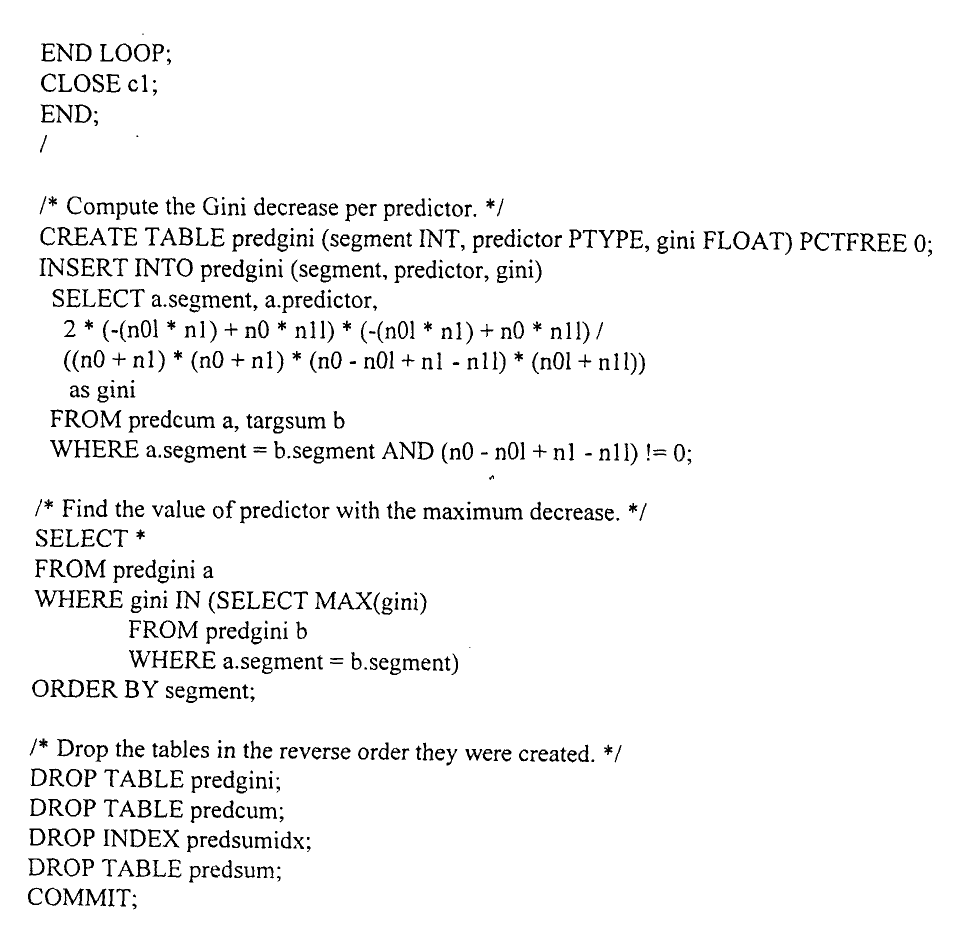

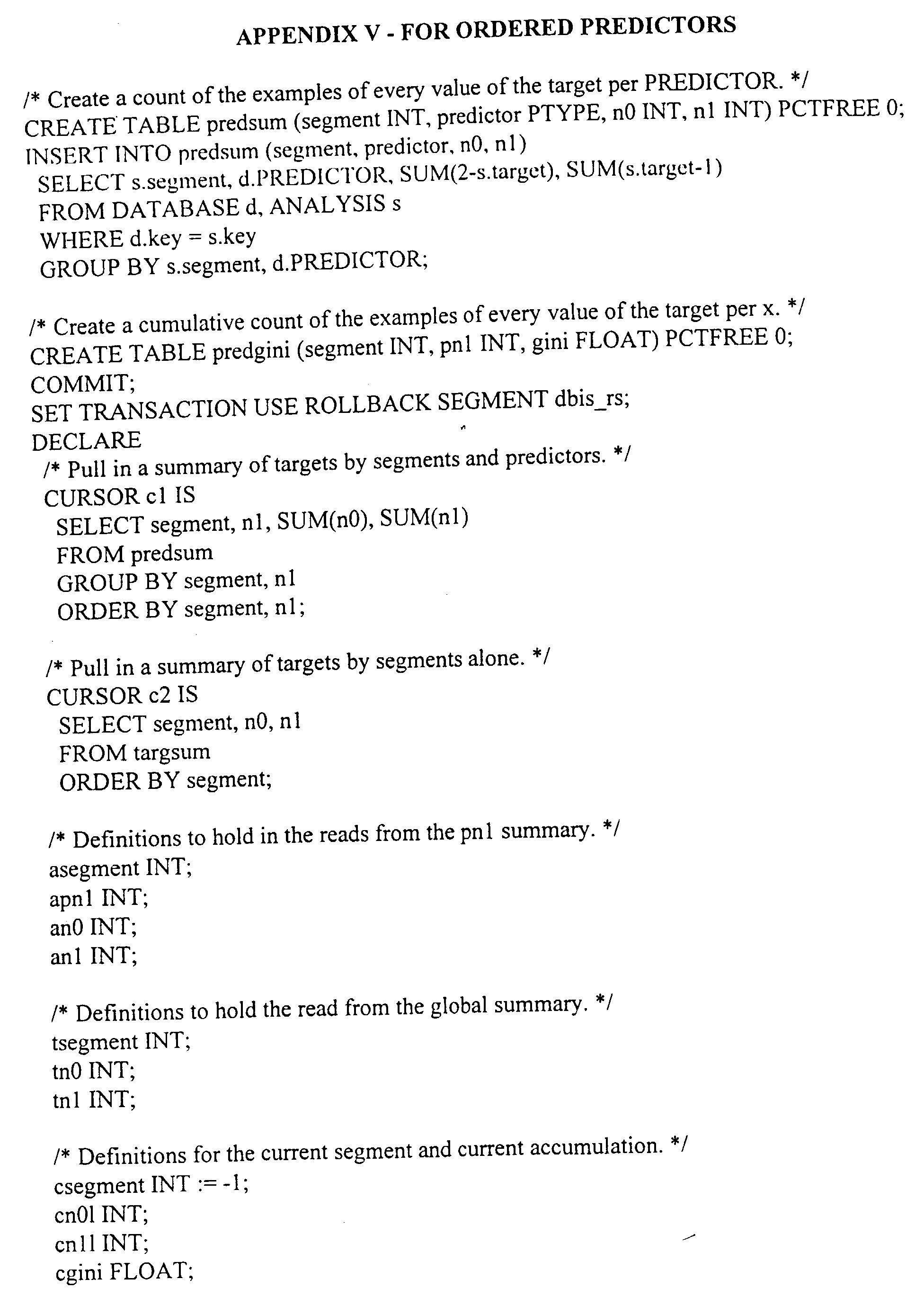

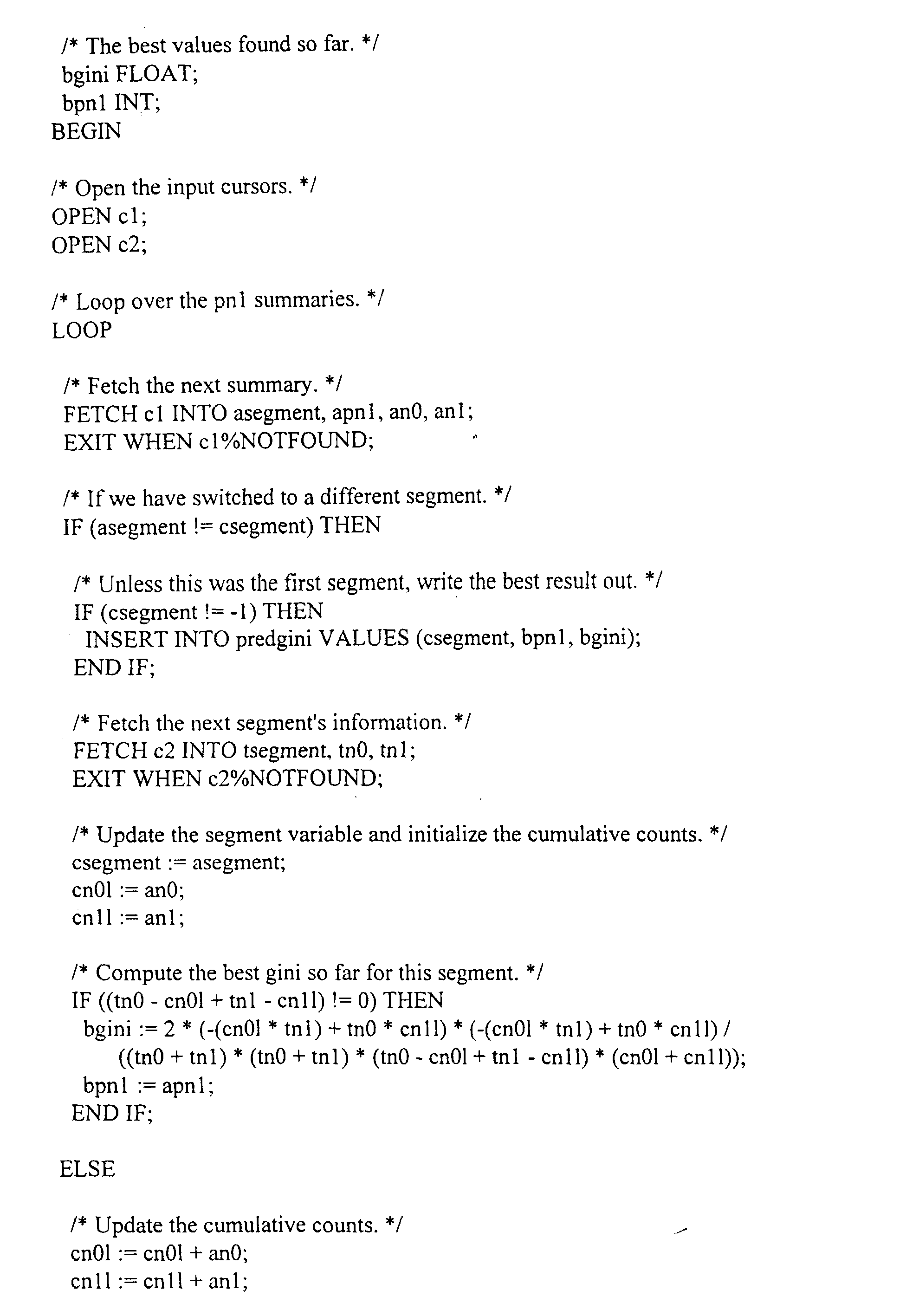

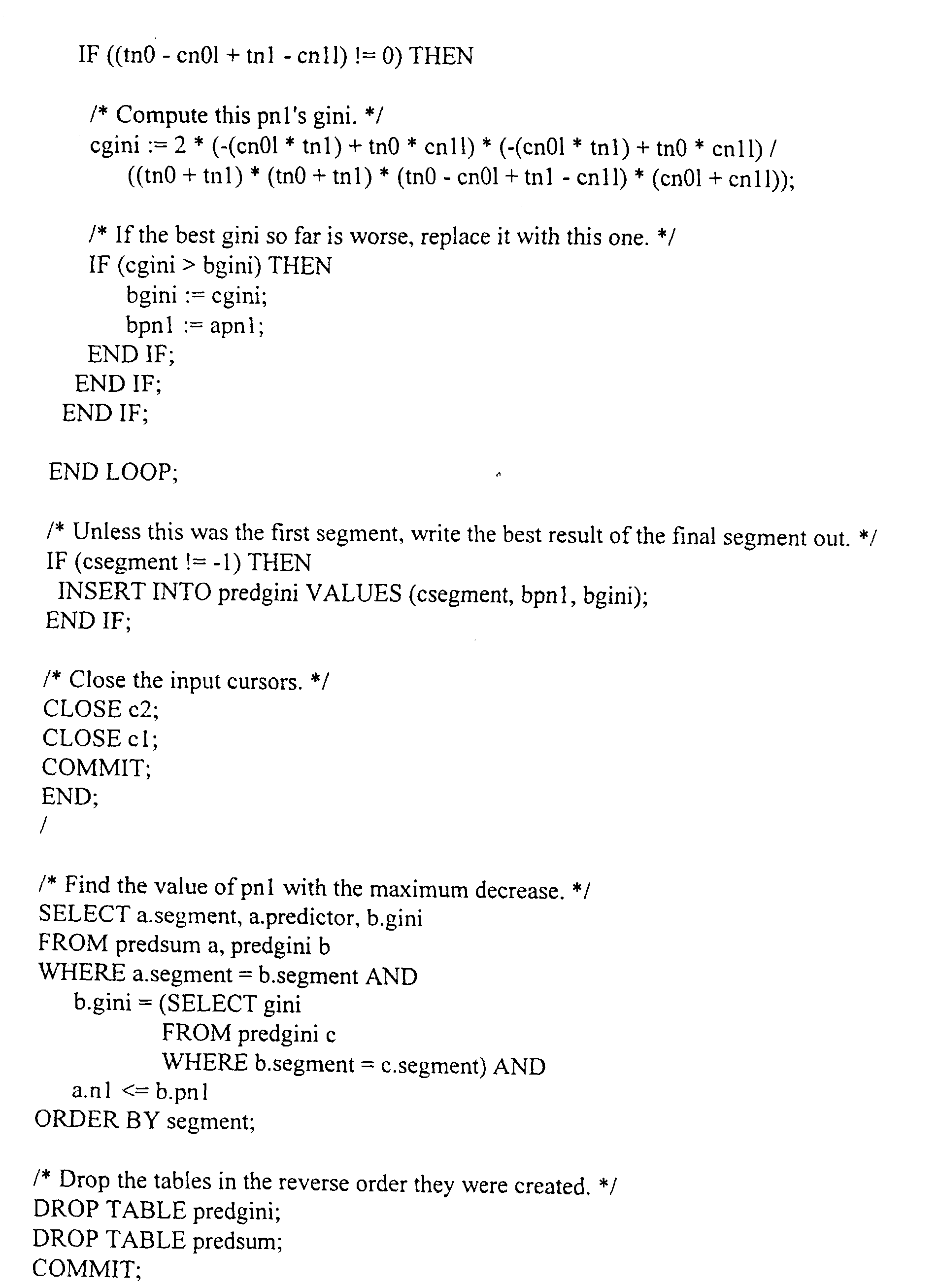

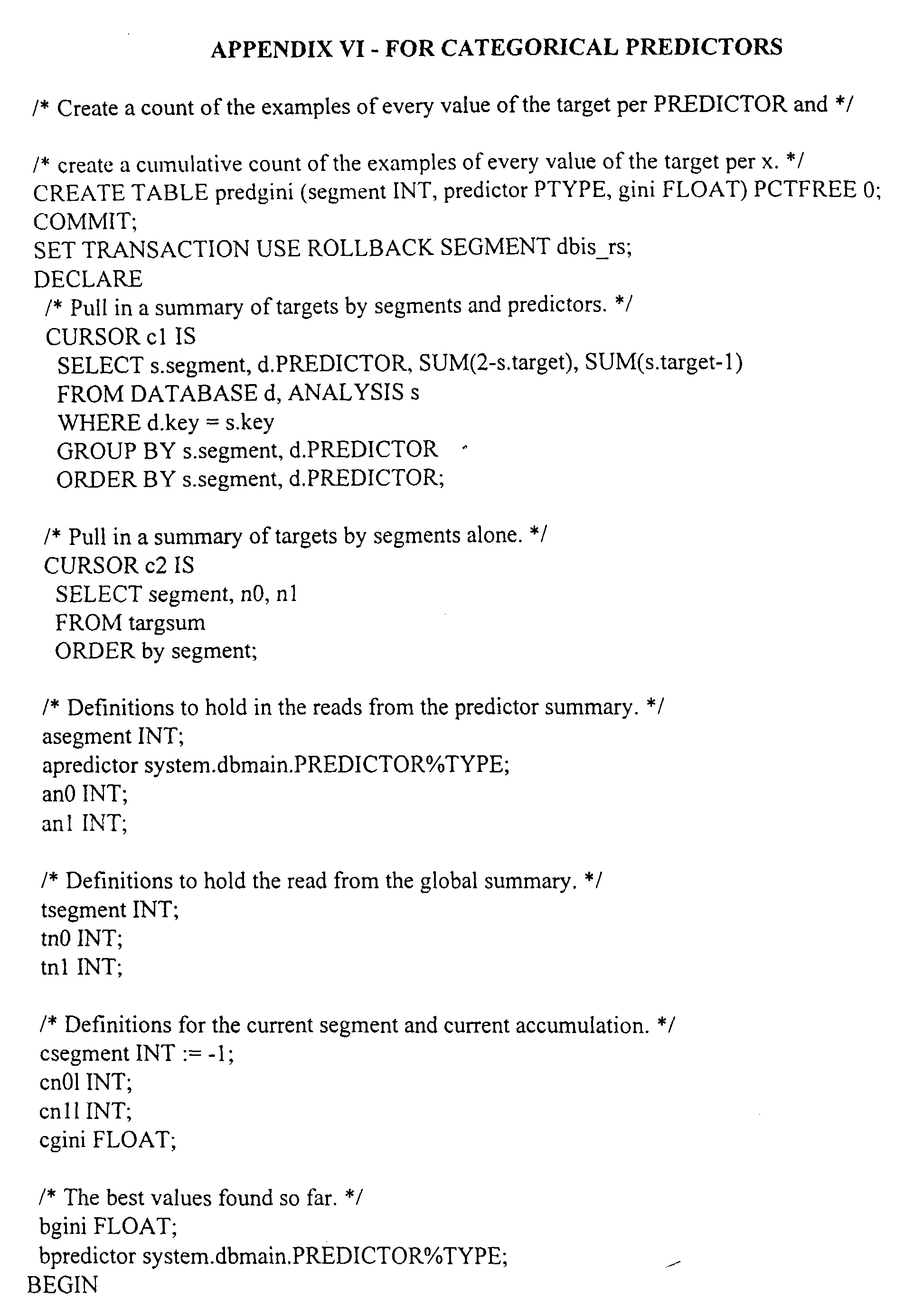

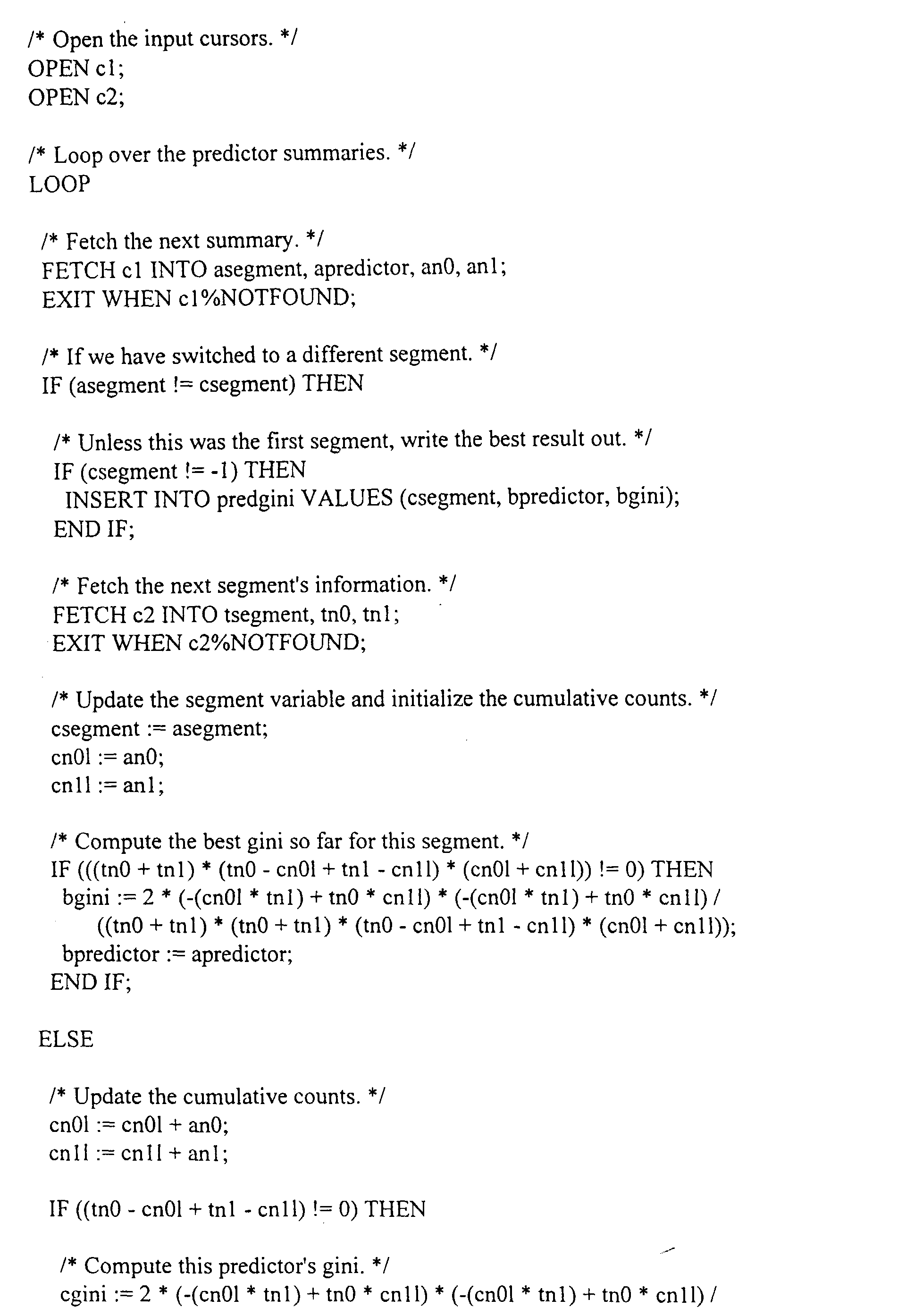

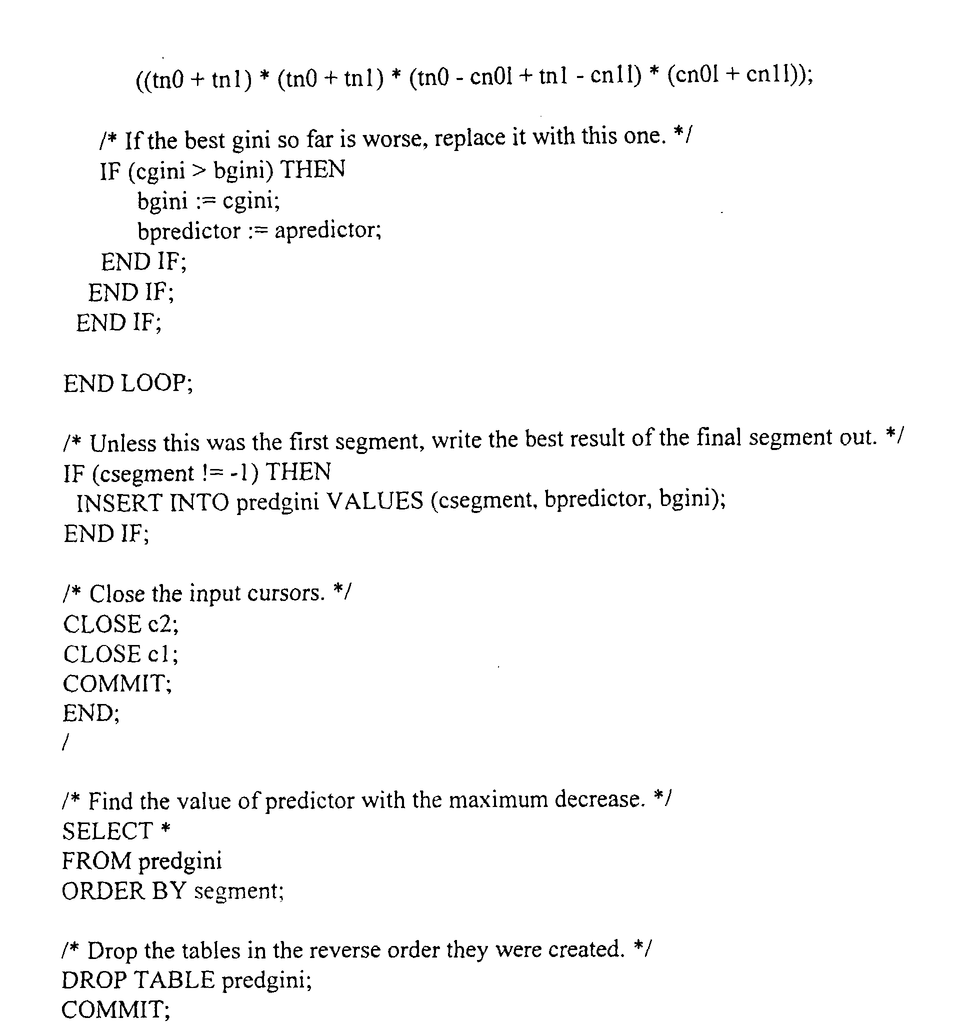

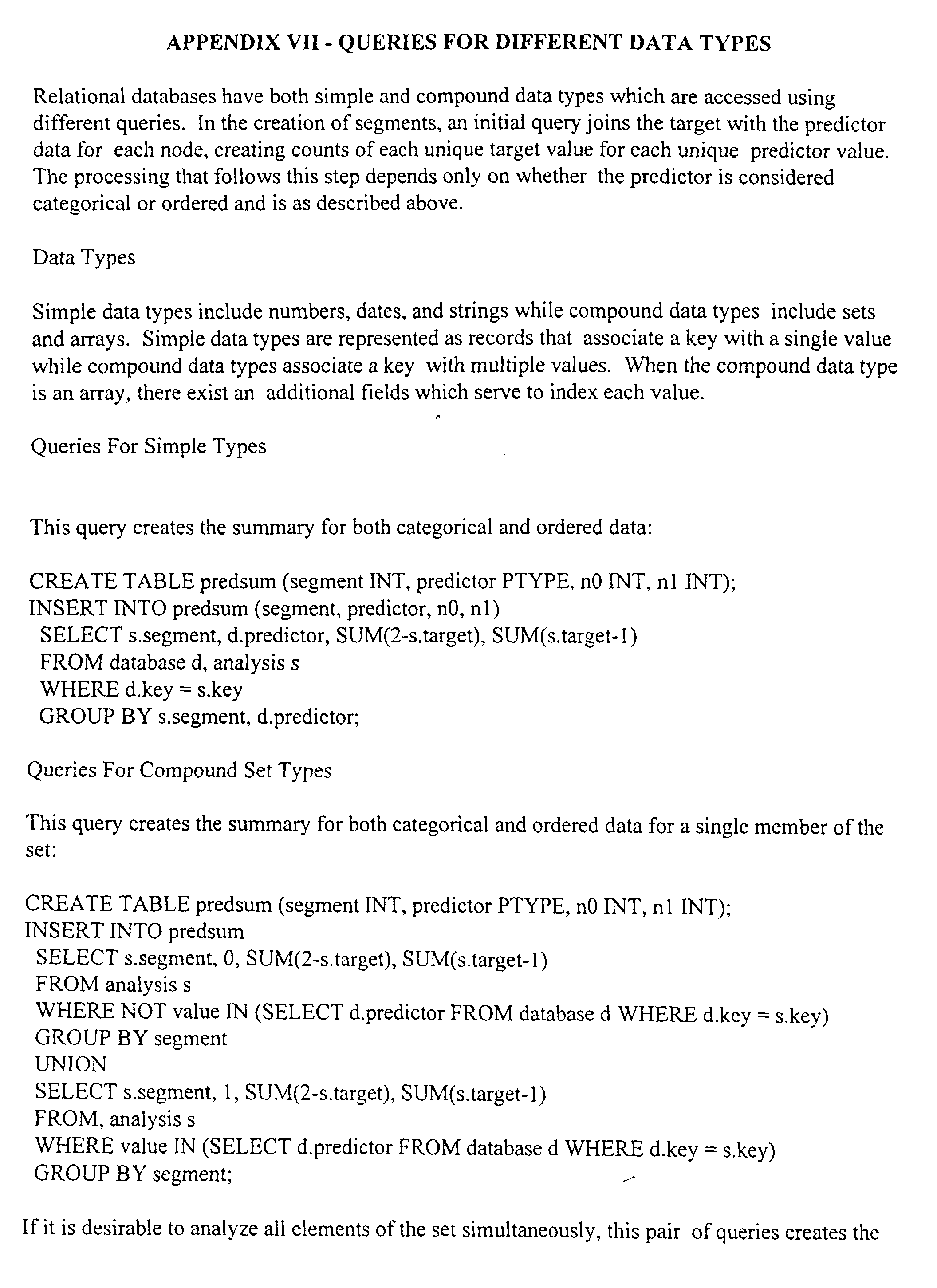

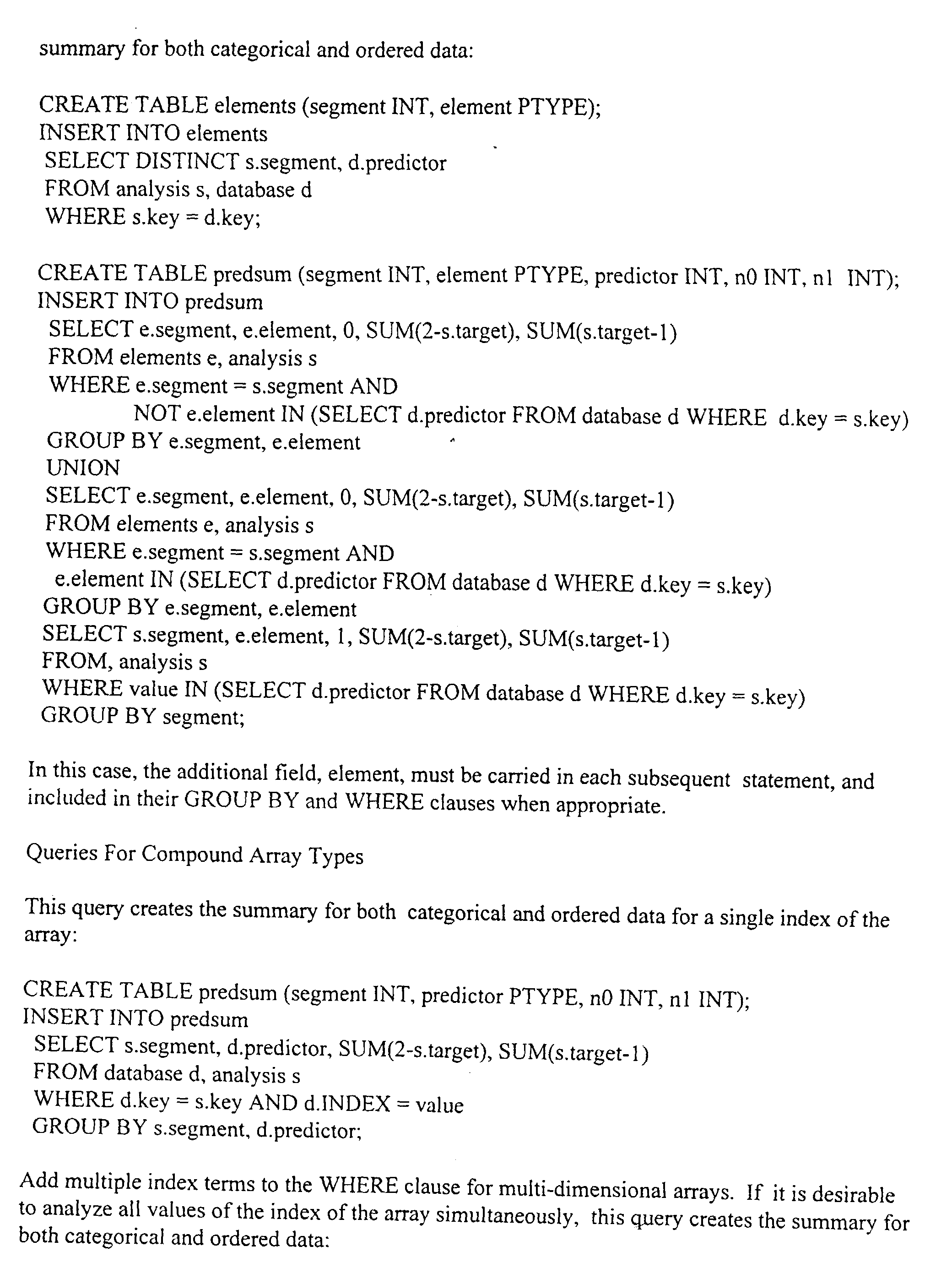

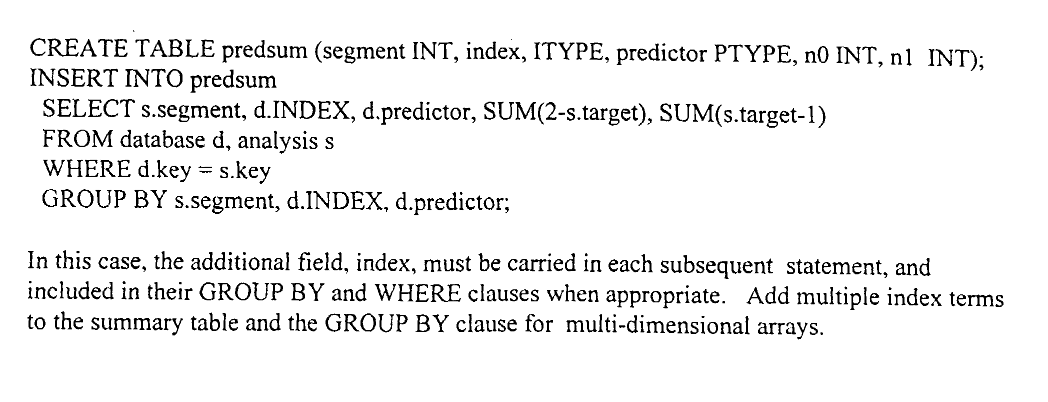

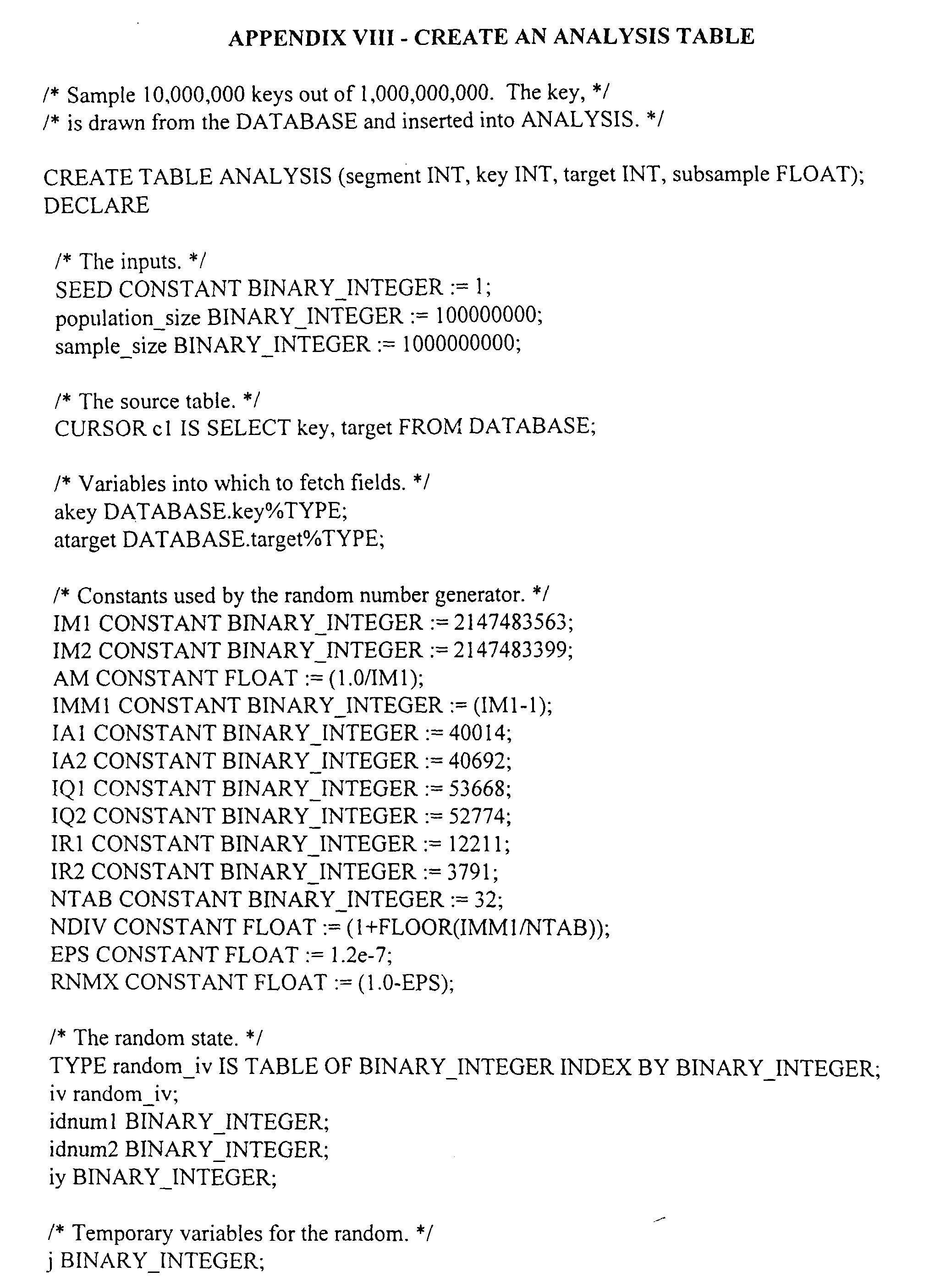

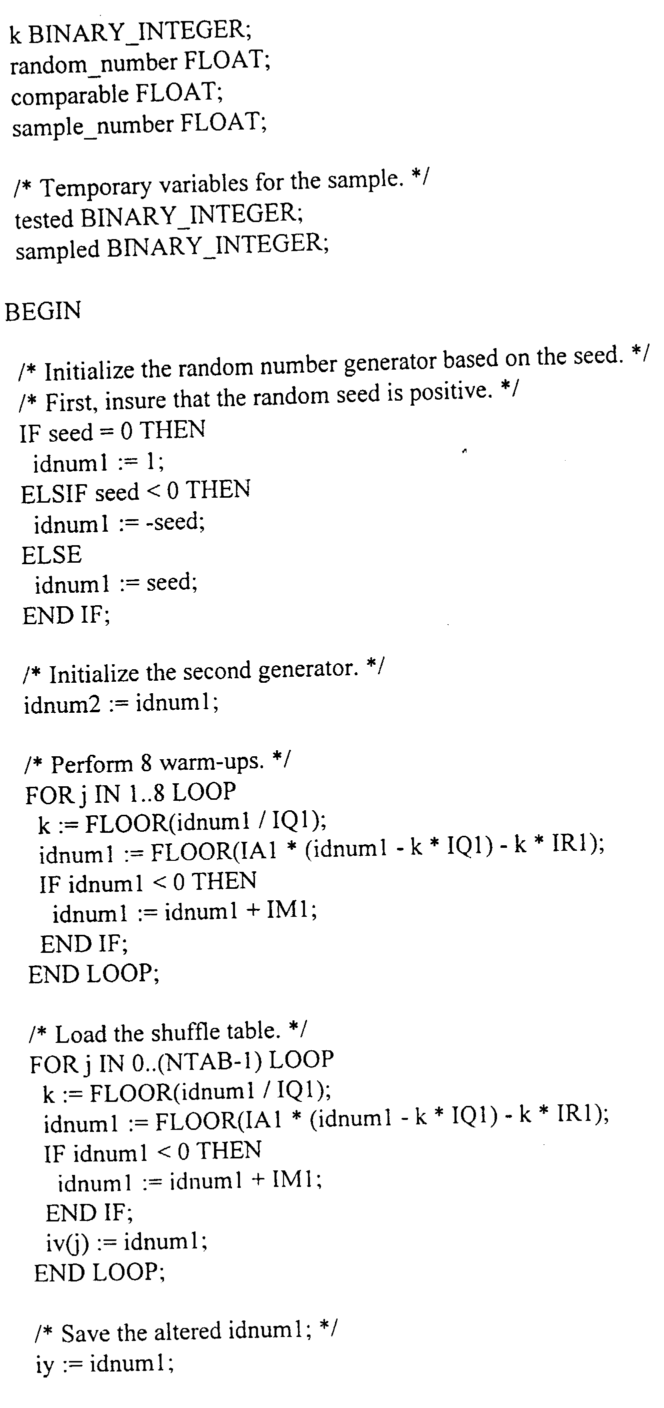

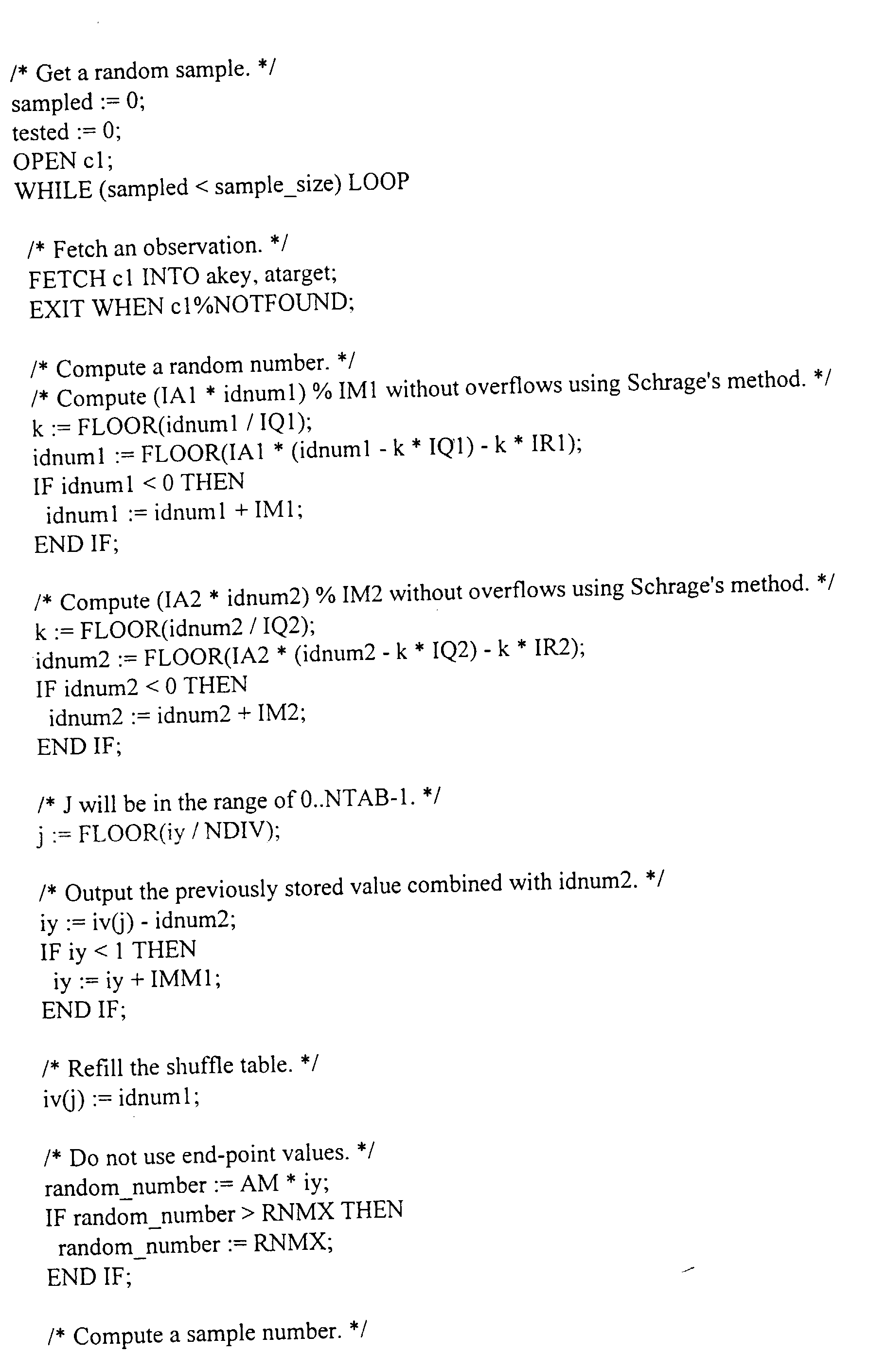

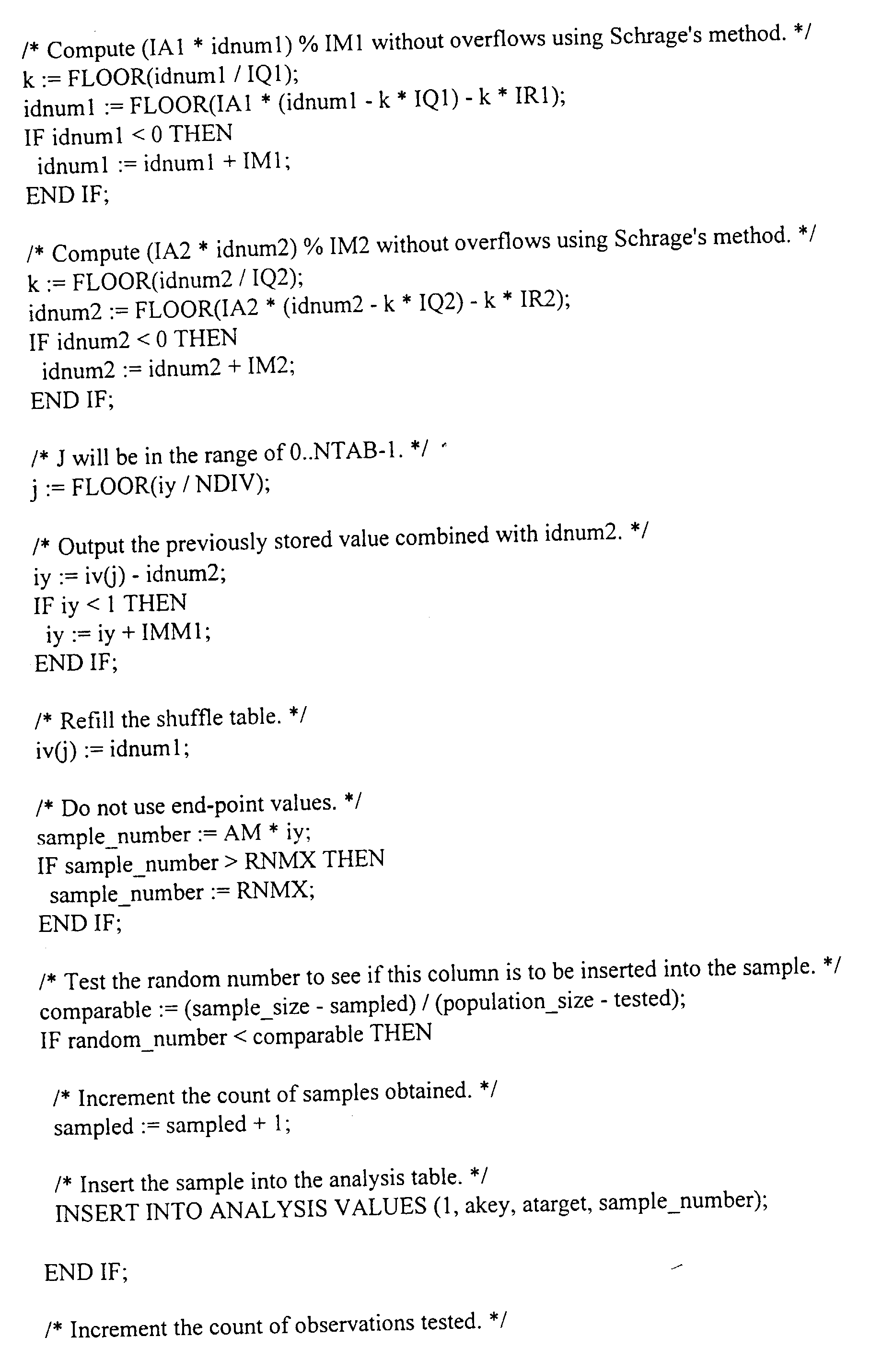

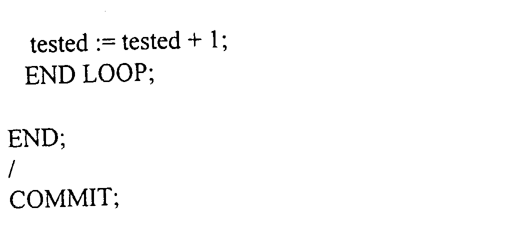

## Claims

1. A computer system for classifying records in a computer database, comprising:
means for creating a table in the computer database for indicating, for each entity in a sample of the computer database, a segment in which the entity is placed; and
means for classifying the entity into segments according to a selection criterion and for modifying the analysis table according to the generated classification.

2. The computer system of claim 1, wherein the means for classifying includes means for identifying suitable selection criteria to maximize a probability that an entity in a segment defined by the selection criteria meets a target characteristic.

3. The computer system of claim 1, wherein said table includes a field containing a random number enabling random sub-sampling of the records in the table.

4. The computer system of claim 3, wherein said random number is tested against a threshold, adjustment of which serves to control the sample size of the sub-sampling operation.
